# EUROPEAN PATENT SPECIFICATION

(11) **EP 3 425 718 B1**
(45) Date of publication and mention of the grant of the patent: **09.04.2025**
(21) Application number: 16855399.8
(22) Date of filing: 12.10.2016
(51) Int. Cl.: H01M 10/0567, H01M 4/66, H01M 10/052, H01M 10/054, H01M 10/0568, H01M 10/0569, H01M 4/38, H01M 10/0525

(54) **ELECTROLYTE SOLUTION FOR NONAQUEOUS ELECTROLYTE BATTERIES, AND NONAQUEOUS ELECTROLYTE BATTERY USING SAME**
ELEKTROLYTLÖSUNG FÜR BATTERIEN MIT WASSERFREIEM ELEKTROLYT SOWIE BATTERIEN MIT WASSERFREIEM ELEKTROLYT DIE DIESE VERWENDEN
SOLUTION ÉLECTROLYTIQUE POUR BATTERIES À ÉLECTROLYTE NON AQUEUX, ET BATTERIE À ÉLECTROLYTE NON AQUEUX L'UTILISANT

(30) Priority: 15.10.2015 JP 2015203327
(43) Date of publication of application: 09.01.2019
(73) Proprietor: Central Glass Company, Limited, Yamaguchi 755-0001 (JP)
(72) Inventor: TAKAHASHI, Mikihiro, Ube-shi Yamaguchi 755-0001 (JP); MORINAKA, Takayoshi, Ube-shi Yamaguchi 755-0001 (JP); KAWABATA, Wataru, Ube-shi Yamaguchi 755-0001 (JP); TANAKA, Toru, Kawagoe-shi Saitama 350-1159 (JP)
(74) Representative: Manitz Finsterwald Patent- und Rechtsanwaltspartnerschaft mbB
(86) International application number: PCT/JP2016/080168
(87) International publication number: WO 2017/065145

(56) References cited:
- JP-A- 2006 286 517
- JP-A- 2008 078 116
- JP-A- 2008 305 772
- JP-A- 2012 230 897
- JP-A- 2013 206 708
- JP-A- 2013 506 711
- JP-A- 2014 194 871
- JP-A- 2015 133 255
- US-A1- 2008 280 210

## Description

### Field of the Invention

The present invention relates to a nonaqueous electrolyte solution for a nonaqueous electrolyte battery, and a nonaqueous electrolyte battery using the nonaqueous electrolyte solution.

### Background Art

Much attention has recently been focused on batteries as electrochemical devices for use in power storage systems for small, high-energy-density applications such as information processing and communication devices, typified by personal computers, video cameras, digital cameras, mobile phones and smartphones, and for use in large power applications such as electric vehicles, hybrid vehicles, auxiliary power sources of fuel cell vehicles, power storage facilities and the like. Lithium nonaqueous electrolyte batteries including lithium ion batteries, lithium batteries and lithium ion condensers are being considered as candidates for these power storage systems.

As electrolyte solutions for lithium nonaqueous electrolyte batteries (hereinafter sometimes referred to as "nonaqueous electrolyte solutions"), widely used are those in which fluorine-containing electrolytes such as LiPF₆ are dissolved as solutes in solvents such as cyclic carbonate, chain carbonate and ester for high battery voltage and capacity. However, the lithium nonaqueous electrolyte batteries with such nonaqueous electrolyte solutions do not always attain satisfactory cycle characteristics, output characteristics and other battery characteristics. It is particularly required that the battery characteristics would not be deteriorated even in a high-temperature environment for use in outdoor applications such as electric vehicles, hybrid vehicles, auxiliary power sources of fuel cell vehicles, power storage facilities. Contrary to these requirements, the battery characteristics are significantly deteriorated as the decomposition of the nonaqueous electrolyte solution at electrode surfaces during charging/discharging becomes accelerated in the high-temperature environment. There has consequently been a demand for an electrolyte solution for a lithium nonaqueous electrolyte battery having good cycle characteristics in a high-temperature environment.

Nevertheless, LiPF₆ widely used as a solute has a significant drawback of being decomposed to lithium fluoride and phosphorus pentafluoride in a high-temperature environment. It is known that: lithium fluoride gets deposited on an electrode surface and acts as a resistance component to cause a performance deterioration of lithium electrochemical device such as lithium ion battery; and phosphorus pentafluoride has a strong Lewis acidity to accelerate decomposition of an electrolyte solvent.

There has thus been a demand for a solute having a higher thermal stability than LiPF₆. As such a solute, the utilization of lithium trifluoromethanesulfonate, lithium bis(trifluoromethanesulfonyl)imide and lithium bis(fluoromethanesulfonyl)imide is being intensively researched.

It is further known that, when lithium cation is inserted in the negative electrode during initial charging, a reaction occurs between the negative electrode and lithium cation or between the negative electrode and electrolyte solvent to form, on a surface of the negative electrode, a coating film containing lithium carbonate or lithium oxide as a main component. This coating film on the electrode surface is called a "Solid Electrolyte Interface (SEI). The battery characteristics are largely influenced by the properties of the SEI.

In order to improve the battery characteristics such as cycle characteristics and durability, it is important to form a stable SEI with a high lithium-ion conductivity and a low electron conductivity. Various attempts has been made to positively form a good SEI with the addition of a small amount (in general, 0.01 mass% to 10 mass%) of additive compound to the electrolyte solution.

For example, Patent Document 1 discloses that the addition of lithium bis(fluorosulfonyl)imide to an electrolyte solution enables interface control of positive and negative electrodes so as to allow improvements in high-temperature retention characteristics. Patent Document 2 discloses that the concurrent use of lithium bis(fluorosulfonyl)imide and propylene carbonate leads to improvements in high-temperature output characteristics, high-temperature cycle characteristics and output characteristics after high-temperature storage.

Similarly, Patent Document 3 discloses that the use of not only a lithium-containing electrolyte salt but also a lithium salt having an oxalato complex as an anion and a lithium salt of a fluorine-containing carboxylic acid or sulfonic acid, typified by lithium trifluoromethanesulfonate, allows further improvements in battery characteristics

Patent Document 4 discloses that the addition of lithium difluorophosphate as an additive to a nonaqueous electrolyte solution makes it possible to form a good coating film by reaction of lithium difluorophosphate with an electrode at a surface thereof during initial charging/discharging, so as to suppress decomposition of a solvent in the nonaqueous electrolyte solution after the formation of the coating film and thereby allows improvements in cycle characteristics.

It is herein reported that a positive electrode current collector of aluminum reacts with LiPF₆ to form on a surface thereof a passivation film as a stable film of aluminum trifluoride (AlF₃) or analogue thereof (considered as aluminum fluoride oxide complex) and insoluble in the majority of solvents except water (see Non-Patent Documents 1 and 2). It is however also reported that this passivation film is destroyed by a chlorine component so that the elution (corrosion) of aluminum proceeds to cause a sudden decrease of battery capacity by significant increase in the interfacial contact resistance between the current collector and positive electrode active material (see Non-Patent Document 3).

It is widely known that not only a chlorine component but also a fluorine-containing sulfonic acid lithium salt or fluorine-containing imide lithium salt such as lithium trifluoromethanesulfonate, lithium bis(trifluoromethanesulfonyl)imide or lithium bis(fluorosulfonyl)imide could corrode a positive electrode current collector of aluminum. It is recently becoming apparent that, in the case of using a nonaqueous electrolyte solution containing a predetermined concentration or more of lithium difluorophosphate, there occurs a phenomenon of aluminum elution from an aluminum foil used as a positive electrode current collector during charging in a high-temperature environment.

As solutions to the above problem, Patent Document 5 discloses the addition of hydrofluoric acid etc. to a nonaqueous electrolyte solution; and Patent Document 6 discloses the use of a current collector with a corrosion prevention film of 50 nm or more in thickness. Moreover, Non-Patent Document 4 proposes the use of a novel, five-membered ring fluorine-containing imide lithium compound (CTFSI-Li) as a solute so as not to induce elution of aluminum component.

The technique of forming the corrosion prevention film leads to increased steps for processing the current collector. The technique of using the CTFSI-Li involves multiple steps for production of the CTFSI-Li. As a result, both of these techniques face the problem of significant increase in cost to prevent elusion of aluminum component from the aluminum foil positive electrode current collector.

The techniques of adding hydrofluoric acid etc. to the nonaqueous electrolyte solution has a very small impact on cost, but does not sufficiently exhibit its effect under severe conditions of high voltage.

Hence, it has been demanded to develop a technique capable of, when a fluorine-containing imide salt, fluorine-containing sulfonic acid salt or fluorine-containing phosphoric acid salt is added to the nonaqueous electrolyte solution, preventing elusion (corrosion) of aluminum component from the aluminum foil positive electrode current collector at low cost even under severe conditions.

The aluminum foil commonly used as the positive electrode current collector is of 1000-series pure aluminum (such as A1085, A1N30 etc.) or 3000-series aluminum-manganese alloy (such as A3003) in which manganese is added for higher strength. A foil of 5000-series aluminum-magnesium alloy in which magnesium is added for higher strength or 8000-series iron-containing aluminum alloy (i.e. alloy that does not belong to 1000 to 7000 series) is also often used as the positive electrode current collector.

As disclosed in Patent Document 7, it is preferable that the aluminum purity of the aluminum foil is 99.80% or higher in order to suppress elution of aluminum component from the aluminum foil used as the positive electrode current collector. It is generally known that, in the case of aluminum alloyed with manganese, magnesium, iron, copper, silicon or the like for higher strength, the elution of aluminum component tends to proceed. The fact remains that not only the 1000-series pure aluminum but also the aluminum alloys containing 0.5 to 3.0% of the other metal have an aluminum content of 90% or more. Both of these aluminum materials cannot avoid the above-mentioned problem of corrosion by chlorine component, fluorine-containing sulfonic acid lithium salt and fluorine-containing imide lithium salt.

Patent Document 12 discloses a lithium-ion battery electrolyte solution which contains ethylene carbonate, dimethyl carbonate, LiPF₆ and 3-chloro-1-propyne.

Patent Document 13 discloses a lithium-ion battery electrolyte solution which contains ethylene carbonate, ethyl methyl carbonate, LiPF₆ and a chloride selected from WCl₆, MoCl₅, NbCl₅, TaCl₅, ZrCl₄, VCl₃, ZnCl₂, PCl₅, SbCl₅, SiCl₄, GeCl₄, SnCl₄, AlCl₃, GaCl₃ or InCl₃.

### Prior Art Documents

### Patent Documents

Patent Document 1: Japanese Laid-Open Patent Publication No. 2014-192143
Patent Document 2: Japanese Laid-Open Patent Publication (Translation of International Publication) No. 2015-509271
Patent Document 3: Japanese Laid-Open Patent Publication No. 2010-238504
Patent Document 4: Japanese Laid-Open Patent Publication No. H11-067270
Patent Document 5: Japanese Laid-Open Patent Publication No. H11-086906
Patent Document 6: International Publication No. 2012/093616
Patent Document 7: Japanese Laid-Open Patent Publication No. H6-267542
Patent Document 8: Japanese Laid-Open Patent Publication No. 2014-15343
Patent Document 9: Japanese Patent No. 4616925
Patent Document 10: Japanese Patent No. 5277550
Patent Document 11: Japanese Patent No. 5630048
Patent Document 12: JP 2013/206708 A
Patent Document 13: US 2008/280210 A1

### Non-Patent Documents

Non-Patent Document 1: "Improvement of Lithium Secondary Battery Materials in Capacity, Output and Safety", Technical Information Institute Co., Ltd. (2008), pp. 261-263
Non-Patent Document 2: Electrochemistry, 69 (2001), pp. 670
Non-Patent Document 3: Kazuhiro TACHIBANA, "About Positive Electrode Aluminum for Lithium Ion Secondary Batteries", Doctoral Thesis (Ph.D in Engineering), Graduate School of Engineering, Yamagata University
Non-Patent Document 4: Research Reports, Asahi Glass Co., Ltd., 60, 2010
Non-Patent Document 5: Z. Anorg. Allg. Chem., 412 (1), pp. 65-70 (1975)

### Summary of the Invention

It is an object of the present invention to provide an electrolyte solution for a nonaqueous electrolyte battery, capable of, even when it contains a fluorine-containing imide salt, a fluorine-containing sulfonic acid salt or a fluorine-containing phosphoric acid salt, suppressing the elution of aluminum component from an aluminum foil used as a positive electrode current collector during charging in a high-temperature environment of e.g. 50°C or higher, and to provide a nonaqueous electrolyte battery using such an electrolyte solution.

As a result of extensive researches made in view of the above-mentioned problems, the present inventors have found the particularly surprising effect that an electrolyte solution for a nonaqueous electrolyte battery, which contains: a nonaqueous organic solvent; a fluorine-containing ionic salt as a solute; and at least one kind selected from the group consisting of a fluorine-containing imide salt, a fluorine-containing sulfonic acid salt and a fluorine-containing phosphoric acid salt as an additive, becomes able to suppress elution of aluminum component from an aluminum foil used as a positive electrode current collector during charging in a high-temperature environment by the addition of a specific amount of chloride ion or a chlorine-containing compound capable of forming chloride ion by charging even though the chloride ion and chorine-containing compound have previously been considered to induce aluminum elution from the aluminum foil positive electrode current collector and thereby cause a deterioration of battery performance. The present invention is defined in the appended claims.

Namely, the present invention provides a nonaqueous electrolyte battery comprising an electrolyte solution for a nonaqueous electrolyte battery (also referred to as "first electrolyte solution"), the nonaqueous electrolyte battery comprising a positive electrode having an aluminum foil as a positive electrode current collector, a negative electrode formed of lithium, a negative electrode material capable of occluding and releasing lithium, sodium or a negative electrode material capable of occluding and releasing sodium, and an electrolyte solution comprising the following components:
(I) a nonaqueous organic solvent;
(II) a fluorine-containing ionic salt as a solute;
(III) an additive being at least one kind selected from the group consisting of a fluorine-containing imide salt, a fluorine-containing sulfonic acid salt and a fluorine-containing phosphoric acid salt; and
(IV) at least one kind selected from the group consisting of lithium chloride, potassium chloride, sodium chloride, magnesium chloride, calcium chloride, lead chloride, cobalt chloride, manganese chloride, iron chloride, copper chloride, quaternary ammonium chlorides, chloromethane, trichloromethane, carbon tetrachloride, dichloromethane, dichloroethane, chloroethane, trichloroethane, chloroethene, trichloroethylene, tetrachloroethylene, acetyl chloride, methyl chloroformate, ethyl chloroformate, oxalyl chloride, chlorobenzene, chlorotoluene, phosphorous trichloride, phosphorus dichloride fluoride, phosphorus chloride difluoride, phosphoryl dichloride fluoride, phosphoryl chloride difluoride, phosphorus tetrachloride fluoride, phosphorus trichloride difluoride, phosphorus dichloride trifluoride, phosphorus chloride tetrafluoride, hexachloride phosphate, pentachloride fluoride phosphate, tetrachloride difluoride phosphate, trichloride trifluoride phosphate, dichloride tetrafluoride phosphate, chloride pentafluoride phosphate, monochlorophosphate, dichlorophosphate, monochloromonofluorophosphate, methanesulfonyl chloride, trifluoromethanesulfonyl chloride, sulfuryl chloride, sulfuryl chloride fluoride, chlorosulfonic acid, benzenesulfonyl chloride, p-toluenesulfonyl chloride, sulfinyl chloride, sulfinyl chloride fluoride, trialkylchlorosilane, dialkyldichlorosilane, alkyltrichlorosilane, dialkylchlorohydrosilane, alkyldichlorohydrosilane and alkylchlorodihydrosilane where alkyl is selected from C₁-C₁₀ aliphatic hydrocarbon groups and C₆-C₁₀ aromatic hydrocarbon groups,
wherein the concentration of the component (IV) is 0.1 mass ppm to 500 mass ppm in terms of chlorine atom relative to the total amount of the components (I) and (II).

The first electrolyte solution may be an electrolyte solution for a nonaqueous electrolyte battery (also referred to as "second electrolyte solution") in which the concentration of the component (IV) is 0.2 mass ppm to 300 mass ppm in terms of chlorine atom relative to the total amount of the components (I) and (II).

The first or second electrolyte solution may be an electrolyte solution for a nonaqueous electrolyte battery (also referred to as "third electrolyte solution") in which the chlorine-containing compound, used as the component (IV) and capable of forming a chloride ion by charging, is at least one kind selected from the group consisting of an organic chlorine compound, a P-Cl bond-containing phosphorus compound, a S(=O)₂-Cl bond-containing sulfonic acid compound, a S(=O)-Cl bond-containing sulfinic acid compound and a Si-Cl bond-containing silicon compound.

The third electrolyte solution may be an electrolyte solution for a nonaqueous electrolyte battery (also referred to as "fourth electrolyte solution") in which the organic chlorine compound is at least one kind selected from the group consisting of an aliphatic hydrocarbon compound with a C-Cl bond and an aromatic hydrocarbon compound with a C-Cl bond.

The third electrolyte solution may be an electrolyte solution for a nonaqueous electrolyte battery (also referred to as "fifth electrolyte solution") in which the P-Cl bond-containing phosphorus compound is at least one kind selected from the group consisting of phosphorous trichloride, phosphorus dichloride fluoride, phosphorus chloride difluoride, phosphoryl dichloride fluoride, phosphoryl chloride difluoride, phosphorus tetrachloride fluoride, phosphorus trichloride difluoride, phosphorus dichloride trifluoride, phosphorus chloride tetrafluoride, hexachloride phosphate, pentachloride fluoride phosphate, tetrachloride difluoride phosphate, trichloride trifluoride phosphate, dichloride tetrafluoride phosphate, chloride pentafluoride phosphate, monochlorophosphate, dichlorophosphate and monochloromonofluorophosphate.

The third electrolyte solution may be an electrolyte solution for a nonaqueous electrolyte battery (also referred to as "sixth electrolyte solution") in which the S(=O)₂-Cl bond-containing sulfonic acid compound is at least one kind selected from the group consisting of methanesulfonyl chloride, trifluoromethanesulfonyl chloride, sulfuryl chloride, sulfuryl chloride fluoride, chlorosulfonic acid, benzenesulfonyl chloride and p-toluenesulfonyl chloride.

The third electrolyte solution may be an electrolyte solution for a nonaqueous electrolyte battery (also referred to as "seventh electrolyte solution") in which the S(=O)-Cl bond-containing sulfinic acid compound is at least one kind selected from the group consisting of sulfinyl chloride and sulfinyl chloride fluoride.

The third electrolyte solution may be an electrolyte solution for a nonaqueous electrolyte battery (also referred to as "eighth electrolyte solution") in which the Si-Cl bond-containing silicon compound is at least one kind selected from the group consisting of trialkylchlorosilane, dialkyldichlorosilane, alkyltrichlorosilane, dialkylchlorohydrosilane, alkyldichlorohydrosilane and alkylchlorodihydrosilane. Herein, an alkyl group of the Si-Cl bond-containing silicon compound is selected from C₁-C₁₀ aliphatic hydrocarbon groups and C₆-C₁₀ aromatic hydrocarbon groups.

Any of the first to eighth electrolyte solutions may be an electrolyte solution for a nonaqueous electrolyte battery (also referred to as "ninth electrolyte solution") in which the concentration of the component (III) as the additive is 0.02 mass% to 10.0 mass% relative to the total amount of the components (I), (II), (III) and (IV). When the component (III) is a fluorine-containing imide salt or fluorine-containing sulfonic acid salt, the concentration of the component (III) is preferably in the range of 0.05 mass% to 5.0 mass%, more preferably 0.07 mass% to 2.0 mass%. When the concentration of the component (III) is less than 0.2 mass%, the characteristics of the nonaqueous electrolyte battery may not be sufficiently improved. When the concentration of the component (III) exceeds 10.0 mass%, on the other hand, the internal resistance of the nonaqueous electrolyte battery may be increased with decrease in the ion conductivity of the electrolyte solution. As will be explained later, specific examples of the solute and specific examples of the fluorine-containing sulfonic imide salt or fluorine-containing sulfonic acid salt partially overlap each other. In this case, it is assumed that: the salt is used as the solute when the amount of the salt used is 0.5 to 2.5 mol/L; and the salt is used as the additive when the amount of the salt used is 0.02 to 10.0 mass%.

The ninth electrolyte solution may be an electrolyte solution for a nonaqueous electrolyte battery (also referred to as "tenth electrolyte solution") in which the concentration of the component (III) as the additive is 0.02 mass% to 4.0 mass% relative to the total amount of the components (I), (II), (III) and (IV). When the component (III) is a fluorine-containing phosphoric acid salt, the concentration of the component (III) is preferably in the range of 0.05 mass% to 3.0 mass%, more preferably 0.07 mass% to 2.0 mass%. When the concentration of the component (III) is less than 0.2 mass%, the characteristics of the nonaqueous electrolyte battery may not be sufficiently improved. When the concentration of the component (III) exceeds 4.0 mass%, on the other hand, it may become difficult to completely dissolve the component (III). In addition, the component (III) may be deposited under low-temperature conditions.

Any of the first to tenth electrolyte solutions may be an electrolyte solution for a nonaqueous electrolyte battery (also referred to as "eleventh electrolyte solution") in which the ionic salt as the solute is an ionic salt having a pair of: at least one kind of cation selected from the group consisting of lithium cation and sodium cation; and at least one kind of anion selected from hexafluorophosphate anion, tetrafluoroborate anion, difluorooxalatoborate anion, tetrafluorooxalatophosphate anion, trifluoromethanesulfonate anion, fluorosulfonate anion, bis(trifluoromethanesulfonyl)imide anion, bis(fluorosulfonyl)imide anion, (trifluoromethanesulfonyl)(fluorosulfonyl)imide anion, bis(difluorophosphonyl)imide anion, (difluorophosphonyl)(fluorosulfonyl)imide anion and (difluorophosphonyl)(trifluorosulfonyl)imide anion.

Any of the first to eleventh electrolyte solutions may be an electrolyte solution for a nonaqueous electrolyte battery (also referred to as "twelfth electrolyte solution") in which: the fluorine-containing imide salt as the additive is at least one kind selected from the group consisting of bis(trifluoromethanesulfonyl)imide salt, bis(pentafluroethanesulfonyl)imide salt, bis(fluorosulfonyl)imide salt, (trifluoromethanesulfonyl)(pentafluoroethanesulfonyl)imide salt, (trifluoromethanesulfonyl)(fluorosulfonyl)imide salt, (pentafluoroethanesulfonyl)(fluorosulfonyl)imide salt, bis(difluorophosphonyl)imide salt, (difluorophosphonyl)(fluorosulfonyl)imide salt and (difluorophosphonyl)(trifluorosulfonyl)imide salt; the fluorine-containing sulfonic acid salt as the additive is at least one kind selected from the group consisting of trifluoromethanesulfonate salt, fluoromethanesulfonate salt and pentafluoromethanesulfonate salt; and the fluorine-containing phosphoric acid salt as the additive is at least one kind selected from the group consisting of monofluorophosphate salt and difluorophosphate salt.

Any of the first to twelfth electrolyte solutions may be an electrolyte solution for a nonaqueous electrolyte battery (also referred to as "thirteenth electrolyte solution") in which cations of the fluorine-containing imide salt, the fluorine-containing sulfonic acid salt and the fluorine-containing phosphoric acid salt as the additive are each at least one kind selected from the group consisting of lithium cation, sodium cation, potassium cation and tertiary ammonium cation.

Any of the first to thirteenth electrolyte solutions may be an electrolyte solution for a nonaqueous electrolyte battery (also referred to as "fourteenth electrolyte solution") in which the nonaqueous organic solvent is at least one kind selected from the group consisting of ethyl methyl carbonate, dimethyl carbonate, diethyl carbonate, methyl propyl carbonate, ethyl propyl carbonate, methyl butyl carbonate, ethylene carbonate, propylene carbonate, butylene carbonate, fluoroethylene carbonate, methyl acetate, ethyl acetate, methyl propionate, ethyl propionate, methyl 2-fluoropropionate, ethyl 2-fluoropropionate, diethyl ether, acetonitrile, propionitrile, tetrahydrofuran, 2-methyltetrahydrofuran, furan, tetrahydropyran, 1,3-dioxane, 1,4-dioxane, dibutyl ether, diisopropyl ether, 1,2-dimethoxyethane, N,N-dimethylformamide, dimethylsulfoxide, sulfolane, γ-butyrolactone and γ-valerolactone.

Any of the first to thirteenth electrolyte solutions may be an electrolyte solution for a nonaqueous electrolyte battery (also referred to as "fifteenth electrolyte solution") in which the nonaqueous organic solvent contains at least one kind selected from the group consisting of cyclic carbonate, chain carbonate and ester.

The fifteenth electrolyte solution may be an electrolyte solution for a nonaqueous electrolyte battery (also referred to as "sixteenth electrolyte solution") in which: the cyclic carbonate is at least one kind selected from the group consisting of ethylene carbonate, propylene carbonate and butylene carbonate; the chain carbonate is at least one kind selected from the group consisting of ethyl methyl carbonate, dimethyl carbonate, diethyl carbonate, methyl propyl carbonate, ethyl propyl carbonate and methyl butyl carbonate; and the ester is at least one kind selected from the group consisting of methyl acetate, ethyl acetate, methyl propionate, ethyl propionate, methyl 2-fluoropropionate and ethyl 2-fluoropropionate.

The present invention also provides a nonaqueous electrolyte battery comprising: a positive electrode having an aluminum foil as a positive electrode current collector; a negative electrode formed of lithium, a negative electrode material capable of occluding and releasing lithium, sodium or a negative electrode material capable of occluding and releasing sodium; and at least one of the first to sixteenth electrolyte solutions.

In the case of a lithium ion battery, for example, fluoride ion formed by decomposition of the fluorine-containing ionic salt such as LiPF₆, LiBF₄ or lithium difluoro(oxalato)borate as the solute reacts with the aluminum positive electrode current collector to form a stable passivation film on the aluminum surface. This passivation film contains AlF₃ or analogue thereof as a main component. When chloride ion is present at a high concentration, Al-F bond of the passivation film component is subsituted with Al-Cl bond by reaction of the passivation film component with the chloride ion. The passivation film component is finally converted to aluminum chloride (AlCl₃) or lithium tetrachloroaluminate (LiAlCl₄), both of which are soluble in the electrolyte solution for the nonaqueous electrolyte battery, so as to cause destruction of the passivation film due to elution of the conversion product.

For example, a battery using a nonaqueous electrolyte solution with a chloride ion concentration of 3000 mass ppm was subjected to repeated charging cycles (charging/discharging test or high-temperature storage test) in a high-temperature environment. After such degradation test, the battery was disassembled to take out the aluminum positive electrode current collector. When the aluminum positive electrode current collector was observed with an electron microscope, there were seen a plurality of corrosion pit in the aluminum surface. It is thus confirmed that the passivation film was obviously destroyed.

It is also confirmed that, in the case where a nonaqueous electrolyte solution containing a material capable of forming chloride ion by charging was subjected in advance to charging operation at a potential higher than or equal to a decomposition potential and then adapted as a nonaqueous electrolyte solution with a chloride ion concentration of 3000 mass ppm, the passivation film was destroyed through charging/discharging test or high-temperature storage test as in the above case.

In the case of using a nonaqueous electrolyte solution with a low chloride ion concentration (e.g. 50 mass ppm), however, there was seen no remarkable corrosion pit in the aluminum surface even under the same conditions. The reason for this is assumed to be that the dissolution (destruction) of the passivation film did not proceed as the Al-F compound such as AlF₃ or analogue thereof as the passivation film component was not sufficiently chlorinated.

Furthermore, a battery using a nonaqueous electrolyte solution in which any of lithium trifluoromethanesulfonate, lithium bis(fluorosulfonyl)imide and lithium difluorophosphate was contained in an amount of 2 mass% was subjected to repeated charging cycles (charging/discharging test or high-temperature storage test) in a high-temperature environment, and then, disassembled to take out the aluminum positive electrode current collector. When the aluminum positive electrode current collector was observed with an electron microscope, there were seen some corrosion pits in the aluminum surface. It is thus assumed that, in this case, as in the above case where the chloride ion was present at a high concentration, the destruction of the passivation film (i.e. the dissolution of the aluminum compound present at the current collector surface into the nonaqueous electrolyte solution) occurred with increase in the solubility of the Al compound by substitution of F of Al-F bond of the passivation film component with trifluoromethanesulfonate anion, bis(fluorosulfonyl)imide anion or difluorophosphate anion or by conversion of the passivation film component to a lithium aluminate having trifluoromethanesulfonate anion, bis(fluorosulfonyl)imide anion or difluorophosphate anion as a fourth ligand.

Herein, it has been surprisingly found that the number of corrosion pits in the aluminum surface was significantly decreased in the case of using a nonaqueous electrolyte solution containing a low concentration (e.g. 50 mass ppm) of the component (IV) in combination with any of lithium trifluoromethanesulfonate, lithium bis(fluorosulfonyl)imide and lithium difluorophosphate as in the present invention as compared to the case of using a nonaqueous electrolyte solution containing no component (IV). The reason for this is not clear at the present moment, but is assumed as follows.

It is now supposed that the chloride ion coexists with e.g. lithium difluorophosphate in the nonaqueous electrolyte solution. The chloride ion, which is small in molecular weight and high in mobility, first penetrates in the positive electrode material layer and reaches the aluminum current collector located innermost of the positive electrode. In the case of using the component (IV) other than chloride ion, the component (IV) is electrochemically or chemically decomposed or reacted to form chloride ion by charging at a potential higher than or equal to the decomposition potential so that the thus-formed chloride ion penetrates in the positive electrode material layer and reaches the aluminum current collector located innermost of the positive electrode. Further, the chloride ion is reacted with the Al-F compound of the passivation film on the aluminum surface by the charging, so that Al-F bond of the Al-F compound is partially substituted with Al-Cl bond. In this partially substituted state (e.g. AlF₂Cl or AlFCl₂), the passivation film component does not exhibit sufficient solubility. Hence, there does not occur dissolution of the passivation film. It can also be considered that, in this partially substituted state, sterically bulky Cl molecule bonded to Al prevents difluorophosphate anion from approaching to the vicinity of Al whereby there does not proceed reaction between Al and difluorophosphate anion and thus does not proceed dissolution of the passivation film.

The concentration of the component (IV) is determined with respect to the amount of chlorine atom contained in the nonaqueous electrolyte solution. The amount of chlorine atom contained in the nonaqueous electrolyte solution can be measured by e.g. an ion chromatography system with an electrical conductivity detector (available as ICS-3000 from Nippon Dionex K.K.), an X-ray fluorescence analyzer (available as ZSX Primus IV from Rigaku Corporation) or a sulfur/chlorine analyzer (available as TOX-2100H from Mitsubishi Chemical Analytech Co., Ltd.).

### Effects of the Invention

According to the present invention, it is possible to provide the electrolyte solution for the nonaqueous electrolyte battery as well as the nonaqueous electrolyte battery in each of which, even though the fluorine-containing imide salt, fluorine-containing sulfonic acid salt or fluorine-containing phosphoric acid salt is contained in the electrolyte solution, the elution of aluminum component from the aluminum foil used as the positive electrode current collector can be suppressed during charging operation in a high-temperature environment.

### Detailed Description of Embodiments

It should be understood that, in the following embodiment, the respective components and their combination are mere examples; and addition, omission, replacement and other change of the components are possible within the range that does not depart from the scope of the present invention. The scope of the present invention is not limited to the following embodiment and is limited only by the following claims.

### (I) Nonaqeuous Organic Solvent

In the electrolyte solution for the nonaqueous electrolyte battery according to the present invention, carbonates, esters, ethers, nitriles, imides and sulfones are usable as the nonaqueous organic solvent.

Specific examples of the nonaqueous organic solvent are ethyl methyl carbonate, dimethyl carbonate, diethyl carbonate, methyl propyl carbonate, ethyl propyl carbonate, methyl butyl carbonate, ethylene carbonate, propylene carbonate, butylene carbonate, fluoroethylene carbonate, methyl acetate, ethyl acetate, methyl propionate, ethyl propionate, methyl 2-fluoropropionate, ethyl 2-fluoropropionate, diethyl ether, acetonitrile, propionitrile, tetrahydrofuran, 2-methyltetrahydrofuran, furan, tetrahydropyran, 1,3-dioxane, 1,4-dioxane, dibutyl ether, diisopropyl ether, 1,2-dimethoxyethane, N,N-dimethylformamide, dimethylsulfoxide, sulfolane, γ-butyrolactone and γ-valerolactone.

For good high-temperature cycle characteristics, it is preferable that the nonaqueous organic solvent contains at least one kind selected from the group consisting of cyclic carbonates and chain carbonates. Further, it is preferable that the nonaqueous organic solvent contains at least one kind selected from the group consisting of esters for good low-temperature input/output characteristics. Specific examples of the cyclic carbonates are ethylene carbonate, propylene carbonate and butylene carbonate. Specific examples of the chain carbonates are ethyl methyl carbonate, dimethyl carbonate, diethyl carbonate, methyl propyl carbonate, ethyl propyl carbonate and methyl butyl carbonate. Specific examples of the esters are methyl acetate, ethyl acetate, methyl propionate, ethyl propionate, methyl 2-fluoropropionate and ethyl 2-fluoropropionate.

The electrolyte solution for the nonaqueous electrolyte battery according to the present invention may contain a polymer and thereby be provided as a polymer solid electrolyte. Herein, the term "polymer solid electrolyte" includes those containing a nonaqueous organic solvent as a plasticizer.

There is no particular limitation on the polymer as long as the polymer is an aprotic polymer capable of dissolving therein the solute and the additive. Examples of the polymer are a polymer having polyethylene oxide in its main chain or side chain, a homopolymer or copolymer of polyvinylidene fluoride, a methacrylate polymer and a polyacrylonitrile. When the plasticizer is added to the polymer, any aprotic nonaqueous organic solvent among the above-mentioned nonaqueous organic solvents can be used as the plasticizer.

### (II) Solute

Examples of the solute usable in the electrolyte solution for the nonaqueous electrolyte battery according to the present invention are those having: at least one kind selected from the group consisting of alkali metal ions and alkaline-earth metal ions; and at least one kind of anion selected from the group consisting of hexafluorophosphate anion, tetrafluoroborate anion, hexafluoroarsenate anion, hexafluoroantimonate anion, difluorooxalatoborate anion, tetrafluorooxalatophosphate anion, trifluoromethanesulfonate anion, bis(trifluoromethanesulfonyl)imide anion, bis(pentafluoroethanesulfonyl)imide anion, (trifluoromethanesulfonyl)(pentafluoroethanesulfonyl)imide anion, bis(fluorosulfonyl)imide anion, (trifluoromethanesulfonyl)(fluorosulfonyl)imide anion, (pentafluoroethanesulfonyl)(fluorosulfonyl)imide anion, tris(trifluoromethanesulfonyl)methide anion, bis(difluorophosphonyl)imide anion, (difluorophosphonyl)(fluorosulfonyl)imide anion and (difluorophosphonyl)(trifluorosulfonyl)imide anion.

There is no particular limitation on the concentration of the solute. The lower limit of the concentration of the solute is generally 0.5 mol/L or more, preferably 0.7 mol/L or more, more preferably 0.9 mol/L or more. The upper limit of the concentration of the solute is generally 2.5 mol/L or less, preferably 2.2 mol/L or less, more preferably 2.0 mol/L or less. When the concentration of the solute is less than 0.5 mol/L, the cycle characteristics and output characteristics of the nonaqueous electrolyte battery may be deteriorated with decrease in the ion conductivity of the electrolyte solution. When the concentration of the solute exceeds 2.5 mol/L, on the other hand, the viscosity of the electrolyte solution becomes high so that the cycle characteristics and output characteristics of the nonaqueous electrolyte battery may be deteriorated with decrease in the ion conductivity of the electrolyte solution. The above solutes can be used solely or in combination of two or more thereof.

When a large amount of the solute is dissolved at a time in the nonaqueous organic solvent, the temperature of the nonaqueous electrolyte solution may rise due to dissolution heat of the solute. If the temperature of the nonaqueous electrolyte solution rises significantly, the decomposition of the solute or solvent unfavorably proceeds to cause coloring or characteristic deterioration of the nonaqueous electrolyte solution. Thus, the temperature at which the solute is dissolved in the nonaqueous organic temperature is not particularly limited but is preferably -20 to 50°C, more preferably 0 to 40°C.

### (III) Additive

Examples of the fluorine-containing imide salt usable as the additive in the electrolyte solution for the nonaqueous electrolyte battery according to the present invention are bis(trifluoromethanesulfonyl)imide salt, bis(pentafluroethanesulfonyl)imide salt, bis(fluorosulfonyl)imide salt, (trifluoromethanesulfonyl)(pentafluoroethanesulfonyl)imide salt, (trifluoromethanesulfonyl)(fluorosulfonyl)imide salt, (pentafluoroethanesulfonyl)(fluorosulfonyl)imide salt, bis(difluorophosphonyl)imide salt, (difluorophosphonyl)(fluorosulfonyl)imide salt and (difluorophosphonyl)(trifluorosulfonyl)imide salt. Examples of the fluorine-containing sulfonic acid salt usable as the additive are trifluoromethanesulfonate salt, fluoromethanesulfonate salt and pentafluoromethanesulfonate salt. Examples of the fluorine-containing phosphoric acid salt usable as the additive are monofluorophosphate salt and difluorophosphate salt.

### (IV) Component

In the electrolyte solution for the nonaqueous electrolyte battery according to the present invention, the component (IV) may be chloride ion formed by mixing "a material ionizable to form chloride ion" with the components (I), (II) and (III). As the "material ionizable to form chloride ion", a metal chloride and a quaternary ammonium salt are usable.

The metal chlorides are lithium chloride, potassium chloride, sodium chloride, magnesium chloride, calcium chloride, lead chloride, cobalt chloride, manganese chloride, iron chloride and copper chloride. Among others, lithium chloride is preferred. Specific examples of the quaternary ammonium salt are ammonium chloride, trimethylammonium chloride, triethylammonium chloride, tri-n-propylammonium chloride, tri-n-butylammonium chloride, tri-n-pentylammonium chloride, tetramethylammonium chloride, tetraethylammonium chloride, tetra-n-propylammonium chloride, tetra-n-butylammonium chloride, tetra-n-pentylammonium chloride, ethyltrimethylammonium chloride, triethylmethylammonium chloride, pyridinium chloride and 1-methylimidazolium chloride. Among others, preferred are triethylammonium chloride, tri-n-butylammonium chloride, ammonium chloride and tetra-n-butylammonium chloride.

In the electrolyte solution for the nonaqueous electrolyte battery according to the present invention, the chlorine-containing compound as the component (IV) other than chloride ion (such as organic chlorine compound, P-Cl bond-containing phosphorus compound, S(=O)₂-Cl bond-containing sulfonic acid compound, S(=O)-Cl bond-containing sulfinic acid compound or Si-Cl bond-containing silicon compound) is of the kind that forms chloride ion by charging at a potential higher than or equal to its decomposition potential.

The organic chlorine compound can be an aliphatic hydrocarbon compound with a C-Cl bond or an aromatic hydrocarbon compound with a C-Cl bond. The organic chlorine compounds are chloromethane, trichloromethane, carbon tetrachloride, dichloromethane, dichloroethane, chloroethane, chloroethene, trichloroethylene, tetrachloroethylene, trichloroethane, acetyl chloride, methyl chloroformate, ethyl chloroformate, oxalyl chloride, chlorobenzene and chlorotoluene. Among others, preferred are trichloromethane, dichloromethane, trichloroethylene, tetrachloroethylene, acetyl chloride and oxalyl chloride.

The P-Cl bond-containing phosphorus compounds are phosphorous trichloride, phosphorus dichloride fluoride, phosphorus chloride difluoride, phosphoryl dichloride fluoride, phosphoryl chloride difluoride, phosphorus tetrachloride fluoride, phosphorus trichloride difluoride, phosphorus dichloride trifluoride, phosphorus chloride tetrafluoride, hexachloride phosphate, pentachloride fluoride phosphate, tetrachloride difluoride phosphate, trichloride trifluoride phosphate, dichloride tetrafluoride phosphate, chloride pentafluoride phosphate, monochlorophosphate, dichlorophosphate and monochloromonofluorophosphate. Among others, dichlorophosphate is preferred.

The S(=O)₂-Cl bond-containing sulfonic acid compounds are methanesulfonyl chloride, trifluoromethanesulfonyl chloride, sulfuryl chloride, sulfuryl chloride fluoride, chlorosulfonic acid, benzenesulfonyl chloride and p-toluenesulfonyl chloride. Among others, preferred are methanesulfonyl chloride, trifluoromethanesulfonyl chloride and sulfuryl chloride.

The S(=O)-Cl bond-containing sulfinic acid compounds are sulfinyl chloride and sulfinyl chloride fluoride. Among others, sulfinyl chloride is preferred.

The Si-Cl bond-containing silicon compounds are trialkylchlorosilane, dialkyldichlorosilane, alkyltrichlorosilane, dialkylchlorohydrosilane, alkyldichlorohydrosilane and alkylchlorodihydrosilane (where an alkyl group of the Si-Cl bond-containing silicon compound is selected from C₁-C₁₀ aliphatic hydrocarbon groups and C₆-C₁₀ aromatic hydrocarbon groups). Among others, trimethylchlorosilane, dimethylchlorosilane and methyltrichlorosilane are preferred.

To obtain the nonaqueous electrolyte solution containing the component (IV), it is feasible to add the component (IV) as the raw material or to indirectly add the component (IV) by using the fluorine-containing imide salt, fluorine-containing sulfonic acid salt, fluorine-containing phosphoric acid salt or solute in which the component (IV) is intentionally left (that is, the component (IV) contained during the process of production is not removed by purification).

### Other Component

In the electrolytic solution for the nonaqueous electrolyte battery according to the present invention, any commonly used additive component may be contained at an arbitrary ratio within the range that does not impair the effects of the present invention. Examples of the additive component are compounds having overcharge preventing function, negative electrode coating function, positive electrode coating function etc., as typified by cyclohexylbenzene, cyclohexylfluorobenzene, biphenyl, difluoroanisole, t-butylbenzene, t-amylbenzene, 2-fluorotoluene, 2-fluorobiphenyl, vinylene carbonate, dimethylvinylene carbonate, vinylethylene carbonate, fluoroethylene carbonate, maleic anhydride, succinic anhydride, propanesultone ,1,3-propanesultone, butanesultone, methylene methane disulfonate, dimethylene methane disulfonate, trimethylene methane disulfonate, methyl methanesulfonate, lithium difluorobis(oxalato)phosphate, sodium difluorobis(oxalato)phosphate, potassium difluorobis(oxalato)phosphate, lithium difluorooxalatoborate, sodium difluorooxalatoborate, potassium difluorooxalatoborate, lithium tetrafluorooxalatophosphate, sodium tetrafluorooxalatophosphate, potassium tetrafluorooxalatophosphate, lithium tris(oxalato)phosphate, hexafluoroisopropanol, trifluoroethanol, di(hexafluoroisopropyl)carbonate and di(trifluoroethyl)carbonate. The electrolytic solution for the nonaqueous electrolyte battery may be used in a quasi-solid state with the addition of a gelling agent or a cross-linked polymer as in the case of a nonaqueous electrolyte battery called a polymer battery. A fluoroalcohol such as hexafluoroisopropanol is usable as an additive for improvement in input/output characteristics because the fluoroalcohol has a low nucleophilicity and thus does not react with the solute such as hexafluorophosphate to generate hydrogen fluoride.

### Nonaqueous Electrolyte Battery

The nonaqueous electrolyte battery according to the present invention includes: a positive electrode; a negative electrode formed from lithium or a negative electrode material capable of occluding and releasing lithium; the above-mentioned nonaqueous electrolyte solution; current collectors, a separator and a case, or includes: a positive electrode; a negative electrode formed from sodium or a negative electrode material capable of occluding and releasing sodium; the above-mentioned nonaqueous electrolyte solution; a current collector, a separator and a case.

### Positive Electrode

The positive electrode is formed using a positive electrode active material, an aluminum foil as a current collector, a conductive agent and a binder. The kind of the positive electrode active material is not particularly limited. As the positive electrode active material, there can be used a material capable of reversibly occluding and releasing an alkali metal ion, such as lithium ion or sodium ion, or alkaline-earth metal ion. Examples of the aluminum foil commonly usable are those of 1000-series pure aluminum (such as A1085 or A1N30) and 3000-series aluminum-manganese alloy (such as A3003) in which manganese is added for higher strength. Foils of 5000-series aluminum-magnesium alloy in which magnesium is added for higher strength and 8000-series iron-containing aluminum alloy (i.e. alloy that does not belong to 1000 to 7000 series) can also be used. In general, the aluminum foil is of several to several tens µm in thickness.

In the case where the cation is lithium ion, examples of the positive electrode active material usable are: lithium-containing transition metal composite oxides such as LiCoO₂, LiNiO₂, LiMnO₂ and LiMn₂O₄; those in which a plurality of transition metals are contained in the above lithium-containing transition metal composite oxides; and those in which transition metals of the above lithium-containing transition metal composite oxides are partially substituted with any metals other than transition metals; oxides such as TiO₂, V₂O₅ and MnO₃; sulfides such as TiS₂ and FeS; conductive polymers such as polyacetylene, polyparaphenylene, polyaniline and polypyrrole; activated carbons; radical-generating polymers; and carbon materials.

### Negative Electrode

The negative electrode is formed using a negative electrode active material, a current collector, a conductive agent and a binder. The kind of the negative electrode active material is not particularly limited. As the negative electrode active material, there can be used a material capable of reversibly occluding and releasing an alkali metal ion, such as lithium ion or sodium ion, or alkaline-earth metal ion.

In the case where the cation is lithium ion, examples of the negative electrode material usable are: lithium metal; alloys and intermetallic compounds of lithium with other metals; and various carbon materials, metal oxides, metal nitrides, activated carbons and conductive polymers each capable of occluding and releasing lithium. As the carbon materials, there can be used graphitizable, non-graphitizable carbon (also called hard carbon) with a (002) plane interval of 0.37 nm or greater, graphite with a (002) plane interval of 0.37 nm or smaller, and the like. The latter graphite can be artificial graphite or natural graphite.

### Conductive Agent and Binder

In the positive and negative electrodes, acetylene black, ketjen black, furnace black, carbon fibers, graphite, fluorinated graphite and the like are usable as the conductive agent. Further, polytetrafluoroethylene, polyvinylidene fluoride, tetrafluoroethylene-perfluoroalkylvinyl ether copolymer, styrene-butadiene rubber, carboxymethylcellulose, methylcellulose, cellulose acetate phthalate, hydroxypropylmethylcellulose and polyvinylalcohol are usable as the binder.

The electrode (positive electrode or negative electrode) can be provided in the form of an electrode sheet by dissolving or dispersing the active material, the conductive agent and the binder into an organic solvent or water, applying the resulting liquid to e.g. a copper foil for the negative electrode or an aluminum foil for the positive electrode, and drying and pressing the applied coating.

As the separator to prevent contact between the positive electrode and the negative electrode, there can be used a nonwoven fabric or porous sheet of polypropylene, polyethylene, cellulose, glass fibers or the like.

Using the above battery components, the nonaqueous electrolyte battery is assembled as an electrochemical device of coin shape, cylindrical shape, rectangular shape, aluminum laminate type etc.

It is feasible to produce the nonaqueous electrolyte battery according to the present invention by using a nonaqueous electrolyte solution in which the above-mentioned component (IV) except chloride ion is contained, and then, charging the battery in advance at a potential higher than or equal to a decomposition potential of the component (IV) except chloride ion to thereby form chloride ion by decomposition of the component (IV).

### Examples

The present invention will be described in more detail below by way of the following examples. It should however be understood that the following examples are illustrative and are not intended to limit the present invention thereto.

### [Formation of LMNO Positive Electrodes]

A positive electrode material paste was prepared by mixing 90 mass% of a LiNi_{1/2}Mn_{3/2}O₄ powder with 5 mass% of polyvinylidene fluoride (hereinafter referred to as PVDF) as a binder and 5 mass% of acetylene black as a conductive agent and adding N-methylpyrrolidone (hereinafter referred to as NMP) to the resulting mixture. The paste was applied to one side of an aluminum foil (A3003, thickness: 20 µm) and subjected to drying and pressurization. LMNO positive electrodes for testing were each formed by punching the thus-obtained aluminum foil laminate into a round shape of 15.5 mm in diameter.

### [Formation of LCO Positive Electrode]

A positive electrode material paste was prepared by mixing 90 mass% of a LiCoO₂ powder with 5 mass% of PVDF as a binder and 5 mass% of acetylene black as a conductive agent and adding NMP to the resulting mixture. The paste was applied to one side of an aluminum foil (A3003, thickness: 20 µm) and subjected to drying and pressurization. LCO positive electrodes for testing were each formed by punching the thus-obtained aluminum foil laminate into a round shape of 15.5 mm in diameter.

### [Formation of NCM Positive Electrode]

A positive electrode material paste was prepared by mixing 90 mass% of a LiNi_{1/3}Mn_{1/3}Co_{1/3}O₂ powder with 5 mass% of PVDF as a binder and 5 mass% of acetylene black as a conductive agent and adding NMP to the resulting mixture. The paste was applied to one side of an aluminum foil (A3003, thickness: 20 µm) and subjected to drying and pressurization. NCM positive electrodes for testing were each formed by punching the thus-obtained aluminum foil laminate into a round shape of 15.5 mm in diameter.

### [Formation of LFP Positive Electrode]

A positive electrode material paste was prepared by mixing 90 mass% of an amorphous carbon-coated LiFePO₄ powder with 5 mass% of PVDF as a binder and 5 mass% of acetylene black as a conductive agent and adding NMP to the resulting mixture. The paste was applied to one side of an aluminum foil (A3003, thickness: 20 µm) and subjected to drying and pressurization. LFP positive electrodes for testing were formed by punching the thus-obtained aluminum foil laminate into a round shape of 15.5 mm in diameter.

### [Formation of Graphite Negative Electrodes]

A negative electrode material paste was prepared by mixing 90 mass% of a graphite powder with 10 mass% of PVDF as a binder and adding NMP to the resulting mixture. The paste was applied to one side of a copper foil and subjected to drying and pressurization. Graphite negative electrodes for testing were each formed by punching the thus-obtained copper foil laminate into a round shape of 15.5 mm in diameter.

### [Production of Nonaqueous Electrolyte Batteries]

Each R2032 type coin cell battery was produced by assembling, in an argon atmosphere of -50°C or lower in dew point, any of the test positive electrodes using the above active materials (LMNO, LCO, NCM, LFP), the test graphite negative electrode and a polyethylene separator (diameter: 16.0 mm) impregnated with an electrolyte solution prepared in the after-mentioned example or comparative example into a SUS316L casing.

### [Initial Charging/Discharging]

The coin cell battery was charged to an upper limit voltage shown in TABLE 1 at 25°C and at a charging rate of 0.3C (i.e. a current value requiring 3.3 hours to finish discharging a cell having a capacity standardized with respect to the positive electrode active material amount). After the coin cell battery reached the upper limit voltage, this voltage was maintained for 1 hour. Then, the coin cell battery was discharged to a lower limit voltage shown in TABLE 1 at a discharging rate of 0.3C. Assuming the above charging and discharging operations as one cycle, the coin cell battery was stabilized by performing three cycles of charging and discharging.

**TABLE 1**

| Positive Electrode | Charging/Discharging (0.3C) | |
|---|---|---|
| | Upper Limit Voltage [V] vs. Li/Li+ | Lower Limit Voltage [V] vs. Li/Li+ |
| LMNO | 4.7 | 3.0 |
| LCO | 4.4 | 3.0 |
| NCM | 4.2 | 3.0 |
| LFP | 3.7 | 2.5 |

### [Evaluation of Corrosion of Aluminum Positive Electrode Current Collector]

After the completion of the initial charging/discharging, the coin cell battery was charged to an upper limit voltage shown in TABLE 1 at a charging rate of 0.3C. After the coin cell battery reached the upper limit voltage, this voltage was maintained for 1 hour. The coin cell battery was taken out of the charging/discharging device and stored for 15 days in a thermostat of 60°C. Then, the coin cell battery was taken out of the thermostat and moved into a glovebox filled with argon of -50°C or lower in dew point. After confirming that the temperature of the coin cell battery was sufficiently lowered, the coin cell battery was disassembled to take out the positive electrode. By immersing this positive electrode in NMP, the active material, conductive agent and binder were removed from the aluminum positive electrode current collector. The aluminum positive electrode current collector was observed, at four points on front surface (center and end regions) and back surface (center and end regions), with an electron microscope so as to measure the number of corrosion pits observed in a square area of 50 µm side at each point. An average value of the four measurement results was used as the number of corrosion pits in the coin cell battery for corrosion evaluation of the aluminum positive electrode current collector.

### [Preparation of Basic Nonaqueous Electrolyte Solutions and Electrolyte Solutions with Component (IV)]

### (Basic Nonaqueous Electrolyte Solution A)

In a glove box filled with argon of -50°C or lower in dew point, lithium hexafluorophosphate (referred to as "LiPF₆") as the component (II) was added at a concentration of 1.0 mol/L and completely dissolved into a mixed solvent of ethylene carbonate (hereinafter referred to as "EC") and ethyl methyl carbonate (hereinafter referred to as "EMC) (volume ratio: 1:2) as the component (I). At this time, the addition rate was maintained at such a level that the solution temperature did not exceed 45°C. The thus-obtained solution was utilized as a basic nonaqueous electrolyte solution A. The concentration of the component (IV) in the basic nonaqueous electrolyte solution A was measured and determined to be lower than or equal to the detection limit.

### (Basic Nonaqueous Electrolyte Solution B)

In a glove box filled with argon of -50°C or lower in dew point, hexafluoroisopropanol (hereinafter referred to as "HFIP") as the other component (commonly used additive component) was added at a concentration of 500 mass ppm into a mixed solvent of EC and EMC (volume ratio: 1:2) as the component (I). Into the resulting solution, LiPF₆ was added as the component (II) at a concentration of 1.0 mol/L and completely dissolved. At this time, the addition rate was maintained at such a level that the solution temperature did not exceed 45°C. The thus-obtained solution was utilized as a basic nonaqueous electrolyte solution B. The concentration of the component (IV) in the basic nonaqueous electrolyte solution B was measured and determined to be lower than or equal to the detection limit. Further, the concentration of free acid in the basic nonaqueous electrolyte solution B was measured by neutralization titration. The free acid concentration was 7.0 mass ppm immediately after the preparation of the nonaqueous electrolyte solution and was 8.0 mass ppm after the storage of the nonaqueous electrolyte solution at room temperature for 2 weeks. Namely, there was almost no change in the free acid concentration. It is clear from these measurement results that hydrogen fluoride was not generated even when the alcohol component, HFIP, was added.

### (Basic Nonaqueous Electrolyte Solution C)

In a glove box filled with argon of -50°C or lower in dew point, LiPF₆ was added as the component (II) at a concentration of 1.0 mol/L and completely dissolved in a mixed solvent of EC, EMC and ethyl 2-fluoropropionate (hereinafter referred to as "FPE") (volume ratio: 1:1:1) as the component (I). At this time, the addition rate was maintained at such a level that the solution temperature did not exceed 45°C. The thus-obtained solution was utilized as a basic nonaqueous electrolyte solution C. The concentration of the component (IV) in the basic nonaqueous electrolyte solution C was measured and determined to be lower than or equal to the detection limit.

### [Measurement Method of Concentration of Component (IV)]

The concentration of the component (IV) can be measured by any of an ion chromatography system with an electrical conductivity detector (e.g. ICS-3000 available from Nippon Dionex K.K.), an X-ray fluorescence analyzer (e.g. ZSX Primus IV available from Rigaku Corporation) and a sulfur/chlorine analyzer (e.g. TOX-2100H available from Mitsubishi Chemical Analytech Co., Ltd.). In each of these measurement devices, the component (IV) is measured in the form of chloride ion. It is thus necessary to, in the case where the component (IV) is not chloride ion, completely decompose the component (IV) by flask combustion method before the measurement and use the thus-obtained absorption liquid for the measurement. Furthermore, the quantification of chloride ion could be interfered with by fluoride ion. In the case where the chloride ion measurement value is expected to be 50 mass ppm or smaller, it is necessary to conduct the measurement after reducing the amount of fluoride ion with the addition of boric acid or borate to the absorption liquid obtained by flask combustion method. In the X-ray fluorescence analyzer, the measurement is conducted using a solid sample obtained by precipitating out chloride ion as silver chloride with the addition of an aqueous silver nitrate solution to the absorption liquid and recovering the precipice through filtration.

### (Test Solution 1)

Crude lithium dichlorophosphate was synthesized by a method disclosed in Patent Document 8 and then purified with acetonitrile and dried. The resulting lithium dichlorophosphate had a purity of 99% in terms of phosphor (as determined by P-NMR measurement). This lithium dichlorophosphate (1.0 mg) was added as the component (IV) and completely dissolved into the basic nonaqueous electrolyte solution A (1.0 kg) by stirring at room temperature. The concentration of the component (IV) in the thus-obtained nonaqueous electrolyte solution was measured by a sulfur/chlorine analyzer (TOX-2100H) and determined to be 0.4 mass ppm. (The amount of the component (IV) added was 0.5 mass ppm.) It is herein noted that the decomposition potential of lithium dichlorophosphate is about 2.7 V.

### (Test Solution 2)

Into the basic nonaqueous electrolyte solution A (1.0 kg), the above lithium dichlorophosphate (99.2 mg) was added as the component (IV) and completely dissolved by stirring at room temperature. The concentration of the component (IV) in the thus-obtained nonaqueous electrolyte solution was measured and determined to be 52 mass ppm. (The amount of the component (IV) added was 50.0 mass ppm.)

### (Test Solution 3)

Into the basic nonaqueous electrolyte solution A (0.5 kg), the above lithium dichlorophosphate (148.8 mg) was added as the component (IV) and completely dissolved by stirring at room temperature. The concentration of the component (IV) in the thus-obtained nonaqueous electrolyte solution was measured and determined to be 144 mass ppm. (The amount of the component (IV) added was 150.0 mass ppm.)

### (Test Solution 4)

Into the basic nonaqueous electrolyte solution A (0.5 kg), the above lithium dichlorophosphate (992 mg) was added as the component (IV) and completely dissolved by stirring at 40°C. The resulting nonaqueous electrolyte solution was cooled to room temperature. The concentration of the component (IV) in the thus-obtained nonaqueous electrolyte solution was measured and determined to be 1008 mass ppm. (The amount of the component (IV) added was 1000 mass ppm.)

### (Test Solution 5)

A triethylammonium chloride reagent (available from Tokyo Chemical Industry Co., Ltd.) was dried under a reduced pressure, thereby yielding triethylammonium chloride ((C₂H₅)₃NHCl) with a water content of 0.1 mass% or less. This triethylammonium chloride (1.9 mg) was added and completely dissolved by stirring at room temperature into the basic nonaqueous electrolyte solution A (1.0 kg). It is herein assumed that the triethylammonium chloride was promptly ionized to form chloride ion as the component (IV). The concentration of the component (IV) in the thus-obtained nonaqueous electrolyte solution was measured and determined to be 0.5 mass ppm. (The amount of the component (IV) added was 0.5 mass ppm.)

### (Test Solution 6)

Into the basic nonaqueous electrolyte solution A (1.0 kg), the above triethylammonium chloride (193.9 mg) was added and completely dissolved by stirring at room temperature. The concentration of the component (IV) in the thus-obtained nonaqueous electrolyte solution was measured and determined to be 49 mass ppm. (The amount of the component (IV) added was 50.0 mass ppm.)

### (Test Solution 7)

Into the basic nonaqueous electrolyte solution A (0.5 kg), the above triethylammonium chloride (290.8 mg) was added and completely dissolved by stirring at room temperature. The concentration of the component (IV) in the thus-obtained nonaqueous electrolyte solution was measured and determined to be 138 mass ppm. (The amount of the component (IV) added was 150.0 mass ppm.)

### (Test Solution 8)

Into the basic nonaqueous electrolyte solution A (0.5 kg), the above triethylammonium chloride (1939 mg) was added and completely dissolved by stirring at 40°C. The resulting nonaqueous electrolyte solution was cooled to room temperature. The concentration of the component (IV) in the thus-obtained nonaqueous electrolyte solution was measured and determined to be 993 mass ppm. (The amount of the component (IV) added was 1000 mass ppm.)

### (Test Solution 9)

Into the basic nonaqueous electrolyte solution A (1.0 kg), trichloromethane (CHCl₃; super dehydrated product available from Wako Pure Chemical Industries, Ltd.) (0.6 mg) was added as the component (IV) and completely dissolved by stirring at room temperature in a closed environment. The concentration of the component (IV) in the thus-obtained nonaqueous electrolyte solution was measured and determined to be 0.3 mass ppm. (The amount of the component (IV) added was 0.5 mass ppm.) It is herein noted that the decomposition potential of trichloromethane is about 2.6 V.

### (Test Solution 10)

Into the basic nonaqueous electrolyte solution A (1.0 kg), the above trichloromethane (56.0 mg) was added as the component (IV) and completely dissolved by stirring at room temperature in a closed environment. The concentration of the component (IV) in the thus-obtained nonaqueous electrolyte solution was measured and determined to be 41 mass ppm. (The amount of the component (IV) added was 50.0 mass ppm.)

### (Test Solution 11)

Into the basic nonaqueous electrolyte solution A (0.5 kg), the above trichloromethane (84.0 mg) was added as the component (IV) and completely dissolved by stirring at room temperature in a closed environment. The concentration of the component (IV) in the thus-obtained nonaqueous electrolyte solution was measured and determined to be 130 mass ppm. (The amount of the component (IV) added was 150.0 mass ppm.)

### (Test Solution 12)

Into the basic nonaqueous electrolyte solution A (0.5 kg), the above trichloromethane (561 mg) was added as the component (IV) and completely dissolved by stirring at room temperature in a closed environment. The concentration of the component (IV) in the thus-obtained nonaqueous electrolyte solution was measured and determined to be 950 mass ppm. (The amount of the component (IV) added was 1000 mass ppm.)

### (Test Solution 13)

Crude lithium difluorophosphate was synthesized from diphosphoryl chloride, LiPF₆ and lithium carbonate by a method disclosed in Example 6 of Patent Document 9, and then, purified once with ethyl acetate. The resulting lithium difluorophosphate had a purity of 99% in terms of fluorine (as determined by P- and N-NMR measurement). In the lithium difluorophosphate, chloride ion and lithium dichlorophosphate were contained as the component (IV). This impurity-containing lithium difluorophosphate (2 g) was added and completely dissolved into the basic nonaqueous electrolyte solution A (100 g) by stirring at room temperature. After the dissolution, there was thus obtained the nonaqueous electrolyte solution containing: 2.0 mass% of the lithium difluorophosphate; and the chloride ion and lithium dichlorophosphate as the component (IV) in a total amount of 85 mass ppm.

### (Test Solution 14)

Into the basic nonaqueous electrolyte solution B (0.5 kg), the above trichloromethane (84.0 mg) was added as the component (IV) and completely dissolved by stirring at room temperature in a closed environment. The concentration of the component (IV) in the thus-obtained nonaqueous electrolyte solution was measured and determined to be 140 mass ppm. (The amount of the component (IV) added was 150.0 mass ppm.)

### (Test Solution 15)

Into the basic nonaqueous electrolyte solution C (0.5 kg), the above trichloromethane (84.0 mg) was added as the component (IV) and completely dissolved by stirring at room temperature in a closed environment. The concentration of the component (IV) in the thus-obtained nonaqueous electrolyte solution was measured and determined to be 140 mass ppm. (The amount of the component (IV) added was 150.0 mass ppm.)

### [Preparation of Additive Component (III)]

### Lithium Difluorophosphate

Lithium difluorophosphate used was prepared by obtaining a solution of 2.7 mass% lithium difluorophosphate in EMC according to a method disclosed in Example 1 of Patent Document 10, concentrating the solution, filtering a deposit of lithium difluorophosphate out from the solution and subjecting the deposit to recrystallization purification.

### Lithium Trifluoromethanesulfonate

Lithium trifluoromethanesulfonate used was a product available from Central Glass Company, Ltd. (PFM-LI, purity: 99% or higher).

### Lithium Bis(fluorosulfonyl)imide

Lithium bis(fluorosulfonyl)imide used was prepared according to a method disclosed in Example 2 of Patent Document 11.

### Lithium Bis(fluorophosphonyl)imide

Lithium bis(fluorophosphonyl)imide used was prepared according to a method disclosed in Non-Patent Document 5.

### [Example 1-1]

A nonaqueous electrolyte solution was prepared by dissolving the lithium difluorophosphate at a concentration of 0.2 mass% as the component (III) in the test solution 1. Using this nonaqueous electrolyte solution, a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 2.

### [Example 1-2]

A nonaqueous electrolyte battery was produced and tested for the corrosion of the aluminum positive electrode current collector in the same manner as in Example 1-1 except that the test solution 2 was used in place of the test solution 1. The results are shown in TABLE 2.

### [Example 1-3]

A nonaqueous electrolyte battery was produced and tested for the corrosion of the aluminum positive electrode current collector in the same manner as in Example 1-1 except that the test solution 3 was used in place of the test solution 1. The results are shown in TABLE 2.

### [Example 1-4]

A nonaqueous electrolyte solution was prepared by dissolving the lithium difluorophosphate at a concentration of 2.0 mass% as the component (III) in the test solution 1. Using this nonaqueous electrolyte solution, a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 2.

### [Example 1-5]

A nonaqueous electrolyte battery was produced and tested for the corrosion of the aluminum positive electrode current collector in the same manner as in Example 1-4 except that the test solution 2 was used in place of the test solution 1. The results are shown in TABLE 2.

### [Example 1-6]

A nonaqueous electrolyte battery was produced and tested for the corrosion of the aluminum positive electrode current collector in the same manner as in Example 1-4 except that the test solution 3 was used in place of the test solution 1. The results are shown in TABLE 2.

### [Example 1-7]

Using the test solution 13, a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 2.

### [Example 1-8]

A nonaqueous electrolyte solution was prepared by dissolving the lithium difluorophosphate at a concentration of 2.0 mass% as the component (III) in the test solution 5. Using this nonaqueous electrolyte solution, a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 3.

### [Example 1-9]

A nonaqueous electrolyte battery was produced and tested for the corrosion of the aluminum positive electrode current collector in the same manner as in Example 1-8 except that the test solution 6 was used in place of the test solution 5. The results are shown in TABLE 3.

### [Example 1-10]

A nonaqueous electrolyte battery was produced and tested for the corrosion of the aluminum positive electrode current collector in the same manner as in Example 1-8 except that the test solution 7 was used in place of the test solution 5. The results are shown in TABLE 3.

### [Example 1-11]

A nonaqueous electrolyte solution was prepared by dissolving the lithium difluorophosphate at a concentration of 2.0 mass% as the component (III) in the test solution 9. Using this nonaqueous electrolyte solution, a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 4.

### [Example 1-12]

A nonaqueous electrolyte battery was produced and tested for the corrosion of the aluminum positive electrode current collector in the same manner as in Example 1-11 except that the test solution 10 was used in place of the test solution 9. The results are shown in TABLE 4.

### [Example 1-13]

A nonaqueous electrolyte battery was produced and tested for the corrosion of the aluminum positive electrode current collector in the same manner as in Example 1-11 except that the test solution 11 was used in place of the test solution 9. The results are shown in TABLE 4.

### [Example 1-14]

A nonaqueous electrolyte solution was prepared by dissolving, in the test solution 11, the lithium difluorophosphate at a concentration of 2.0 mass% as the component (III) and vinylene carbonate (hereinafter referred to as "VC") at a concentration of 2.0 mass% as the other component (commonly used additive component). Using this nonaqueous electrolyte solution, a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 5.

### [Example 1-15]

A nonaqueous electrolyte battery was produced and tested for the corrosion of the aluminum positive electrode current collector in the same manner as in Example 1-11 except that the test solution 14 was used in place of the test solution 9. The results are shown in TABLE 5.

### [Example 1-16]

A nonaqueous electrolyte battery was produced and tested for the corrosion of the aluminum positive electrode current collector in the same manner as in Example 1-11 except that the test solution 15 was used in place of the test solution 9. The results are shown in TABLE 5.

### [Comparative Example 1-1]

A nonaqueous electrolyte solution was prepared by dissolving the lithium difluorophosphate at a concentration of 0.2 mass% as the component (III) in the basic nonaqueous electrolyte solution A. Using this nonaqueous electrolyte solution (in which the component (IV) was not contained), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 2.

### [Comparative Example 1-2]

A nonaqueous electrolyte solution was prepared by dissolving the lithium difluorophosphate at a concentration of 2.0 mass% as the component (III) in the basic nonaqueous electrolyte solution A. Using this nonaqueous electrolyte solution (in which the component (IV) was not contained), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLES 2, 3 and 4.

### [Comparative Example 1-3]

A nonaqueous electrolyte solution was prepared by dissolving the lithium difluorophosphate at a concentration of 2.0 mass% as the component (III) in the test solution 4. Using this nonaqueous electrolyte solution (in which the concentration of the component (IV) was more than 500 mass ppm), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 2.

### [Comparative Example 1-4]

A nonaqueous electrolyte solution was prepared by dissolving the lithium difluorophosphate at a concentration of 2.0 mass% as the component (III) in the test solution 8. Using this nonaqueous electrolyte solution (in which the concentration of the component (IV) was more than 500 mass ppm), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 3.

### [Comparative Example 1-5]

A nonaqueous electrolyte solution was prepared by dissolving the lithium difluorophosphate at a concentration of 2.0 mass% as the component (III) in the test solution 12. Using this nonaqueous electrolyte solution (in which the concentration of the component (IV) was more than 500 mass ppm), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 4.

**TABLE 2**

| | Positive Electrode Charging Potential | Electrolyte Solution for Nonaqueous Electrolyte Battery | | | | | Collector Corrosion Pits [number/50 µm²] |
|---|---|---|---|---|---|---|---|
| | | (1) | (II) | (III) | (IV) | | |
| | | | Kind Amount [mol/L] | Kind Amount [mass%] | Kind | Amount [mass ppm] | |
| Example 1-1 | LMNO 4.7 V | EC:EMC = 1:2 (vol. ratio) | LiPF₆ 1.0 | LiPO₂F₂ 0.2 | LiPO₂Cl₂ | 0.4 | 8 |
| Example 1-2 | | | | | | 52 | 2 |
| Example 1-3 | | | | | | 144 | 2 |
| Comparative Example 1-1 | | | | | none | | 13 |
| Example 1-4 | | | | LiPO₂F₂ 2.0 | LiPO₂Cl₂ | 0.4 | 41 |
| Example 1-5 | | | | | | 52 | 23 |
| Example 1-6 | | | | | | 144 | 24 |
| Example 1-7 | | | | | LiPO₂Cl₂ and chloride ion (ionized from LiCl) | 85 | 23 |
| Comparative Example 1-2 | | | | | none | | 45 |
| Comparative Example 1-3 | | | | | LiPO₂Cl₂ | 1008 | > 50 |

**TABLE 3**

| | Positive Electrode | Electrolyte Solution for Nonaqueous Electrolyte Battery | | | | | Collector Corrosion Pits [number/50 µm²] |
|---|---|---|---|---|---|---|---|
| | | (I) | (II) | (III) | (IV) | | |
| | Charging Potential | | Kind Amount [mol/L] | Kind Amount [mass%] | Kind | Amount [mass ppm] | |
| Example 1-8 | LMNO 4.7 V | EC:EMC = 1:2 (vol. ratio) | LiPF₆ 1.0 | LiPO₂F₂ 2.0 | LiPO₂Cl₂ and chloride ion (ionized from LiCl) | 0.5 | 37 |
| Example 1-9 | | | | | | 49 | 23 |
| Example 1-10 | | | | | | 138 | 28 |
| Comparative Example 1-2 | | | | | none | | 45 |
| Comparative Example 1-4 | | | | | LiPO₂Cl₂ and chloride ion (ionized from LiCl) | 993 | > 50 |

**TABLE 4**

| | Positive Electrode | Electrolyte Solution for Nonaqueous Electrolyte Battery | | | | | Collector Corrosion Pits [number/50 µm²] |
|---|---|---|---|---|---|---|---|
| | | (I) | (II) | (III) | (IV) | | |
| | Charging Potential | | Kind Amount [mol/L] | Kind Amount [mass%] | Kind | Amount [mass ppm] | |
| Example 1-11 | LMNO 4.7 V | EC:EMC = 1:2 (vol. ratio) | LiPF₆ 1.0 | LiPO₂F₂ 2.0 | CHCl₃ | 0.3 | 41 |
| Example 1-12 | | | | | | 41 | 28 |
| Example 1-13 | | | | | | 130 | 28 |
| Comparative Example 1-2 | | | | | none | | 45 |
| Comparative Example 1-5 | | | | | CHCl₃ | 950 | > 50 |

**TABLE 5**

| | Positive Electrode | Electrolyte Solution for Nonaqueous Electrolyte Battery | | | | | | Collector Corrosion Pits [number/50 µm²] |
|---|---|---|---|---|---|---|---|---|
| | | (I) | (II) | (III) | (IV) | | Other | |
| | Charging Potential | | Kind Amount [mol/L] | Kind Amount [mass%] | Kind | Amount [mass ppm] | Kind Amount [mass%] | |
| Example 1-14 | LMNO 4.7 V | EC:EMC = 1:2 (vol. ratio) | LiPF₆ 1.0 | LiPO₂F₂ 2.0 | CHCl₃ | 130 | VC 2.0 | 30 |
| Example 1-15 | LMNO 4.7 V | EC:EMC = 1:2 (vol. ratio) | LiPF₆ 1.0 | LiPO₂F₂ 2.0 | CHCl₃ | 140 | HFIP 0.05 | 31 |
| Example 1-16 | LMNO 4.7 V | EC:EMC:FPE = 1:1:1 (vol. ratio) | LiPF₆ 1.0 | LiPO₂F₂ 2.0 | CHCl₃ | 140 | none | 27 |

As shown in TABLES 2 to 5, the corrosion of the aluminum positive electrode current collector was particularly likely to proceed under the condition of a charging potential of 4.7 V in Comparative Examples 1-3, 1-4 and 1-5 in each of which the concentration of the component (IV) was about 1000 mass ppm.

Next, comparisons are made between Examples 1-1 to 1-3 and Comparative Example 1-1 in each of which the concentration of the component (III) was 0.2 mass%. It was confirmed that, as compared to Comparative Example 1-1 where the component (IV) was not contained, the corrosion was suppressed with the addition of 0.4 mass ppm of the component (IV) even though the corrosion suppression effect was slight (see Example 1-1). The large corrosion suppression effect was seen when 52 mass ppm of the component (IV) was added (see Example 1-2). When the concentration of the component (IV) was increased to 144 mass ppm (see Example 1-3), the large corrosion suppression effect was also seen and was almost equal to that seen with the addition of 52 mass ppm of the component (IV).

The same tendency was seen in Examples 1-4 to 1-6 and Comparative Example 1-2 in each of which the concentration of the component (III) was 2.0 mass%. More specifically, it was confirmed that, as compared to Comparative Example 1-2 in which the component (IV) was not contained, the corrosion was suppressed with the addition of 0.4 mass ppm of the component (IV) even though the corrosion suppression effect was slight (see Example 1-4). The large corrosion suppression effect was seen when 52 mass ppm of the component (IV) was added (see Example 1-5). When the concentration of the component (IV) was increased to 144 mass ppm (see Example 1-6), the large corrosion suppression effect was also seen and was almost equal to that seen with the addition of 52 mass ppm of the component (IV).

The effect of the addition of the component (IV) was similar even when the kind of the component (IV) was varied (see Examples 1-8 to 1-10 and Examples 1-11 to 1-13).

Herein, there is an appropriate range of the concentration of the component (IV). It is considered that, when the component (IV) is added excessively, the progress of the corrosion is accelerated as mentioned above. It is namely assumed that the effect to cause corrosion by the component (VI) itself exceeds the effect of the component (IV) to suppress corrosion by difluorophosphoric acid when the concentration of Cl is more than 500 mass ppm.

In Example 1-7, the lithium difluorophosphate containing the component (IV) was used as the raw material of the nonaqueous electrolyte solution. Even in such a case, the addition effect of the component (IV) was similarly confirmed as in the case of adding the component (IV) separately as the raw material.

As is clear from comparison of Example 1-13 of TABLE 4 and Examples 1-14 and 1-15 of TABLE 5, the similar effect of the addition of the component (IV) was confirmed even when the other component (commonly used additive component) was added.

The similar effect of the addition of the component (IV) was also confirmed even when the kind of the component (I), that is, the solvent of the nonaqueous electrolyte solution was varied as in Example 1-16.

### [Example 2-1]

A nonaqueous electrolyte battery was produced and tested for the corrosion of the aluminum positive electrode current collector in the same manner as in Example 1-9 except that the lithium trifluoromethanesulfonate was used at a concentration of 7.0 mass% as the component (III) in place of the lithium difluorophosphate. The results are shown in TABLE 6.

### [Example 2-2]

A nonaqueous electrolyte battery was produced and tested for the corrosion of the aluminum positive electrode current collector in the same manner as in Example 1-9 except that the lithium bis(fluorosulfonyl)imide was used at a concentration of 7.0 mass% as the component (III) in place of the lithium difluorophosphate. The results are shown in TABLE 6.

### [Example 2-3]

A nonaqueous electrolyte battery was produced and tested for the corrosion of the aluminum positive electrode current collector in the same manner as in Example 1-9 except that the lithium bis(fluorophosphonyl)imide was used at a concentration of 7.0 mass% as the component (III) in place of the lithium difluorophosphate. The results are shown in TABLE 6.

### [Comparative Example 2-1]

A nonaqueous electrolyte solution was prepared by dissolving the lithium trifluoromethanesulfonate at a concentration of 7.0 mass% as the component (III) in the basic nonaqueous electrolyte solution A. Using this nonaqueous electrolyte solution (in which the component (IV) was not contained), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 6.

### [Comparative Example 2-2]

A nonaqueous electrolyte solution was prepared by dissolving the lithium bis(fluorosulfonyl)imide at a concentration of 7.0 mass% as the component (III) in the basic nonaqueous electrolyte solution A. Using this nonaqueous electrolyte solution (in which the component (IV) was not contained), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 6.

### [Comparative Example 2-3]

A nonaqueous electrolyte solution was prepared by dissolving the lithium bis(fluorophosphonyl)imide at a concentration of 7.0 mass% as the component (III) in the basic nonaqueous electrolyte solution A. Using this nonaqueous electrolyte solution (in which the component (IV) was not contained), a nonaqueous electrolyte battery (LMNO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 6.

**TABLE 6**

| | Positive Electrode | Electrolyte Solution for Nonaqueous Electrolyte Battery | | | | | Collector Corrosion Pits [number/50 µm²] |
|---|---|---|---|---|---|---|---|
| | | (1) | (II) | (III) | (IV) | | |
| | Charging Potential | | Kind Amount [mol/L] | Kind Amount [mass%] | Kind | Amount [mass ppm] | |
| Example 2-1 | LMNO 4.7 V | EC:EMC =1:2 (vol. ratio) | LiPF₆ 1.0 | lithium trifluoromethane sulfonate 7.0 | chloride ion (ionized from (C₂H₅)₃NHCl) | 48 | 33 |
| Comparative Example 2-1 | | | | | none | | > 50 |
| Example 2-2 | | | | lithium bis(fluoro sulfonyl)imide 7.0 | chloride ion (ionized from (C₂H₃)₃NHCl) | 48 | 28 |
| Comparative Example 2-2 | | | | | none | | > 50 |
| Example 2-3 | | | | lithium bis(fluoro phosphonyl)imide 7.0 | chloride ion (ionized from (C₂H₅)₃NHCl) | 48 | 23 |
| Comparative Example 2-3 | | | | | none | | 33 |

As shown in TABLE 6, the corrosion of the aluminum positive electrode current collector proceeded under the condition of a charging potential of 4.7 V in Comparative Examples 2-1 to 2-3 in which the component (IV) was not contained in the nonaqueous electrolyte solution even though the kind of the component (III) was varied. On the other hand, the corrosion of the aluminum positive electrode current collector was suppressed in each of Examples 2-1 to 2-3 in which an appropriate amount of the component (IV) was contained in the nonaqueous electrolyte solution.

### [Example 3-1]

A nonaqueous electrolyte battery was produced and tested for the corrosion of the aluminum positive electrode current collector in the same manner as in Example 1-5 except that the testing positive electrode used was changed from the LMNO positive electrode to the LCO positive electrode. The results are shown in TABLE 7.

### [Example 3-2]

A nonaqueous electrolyte battery was produced and tested for the corrosion of the aluminum positive electrode current collector in the same manner as in Example 1-5 except that the testing positive electrode used was changed from the LMNO positive electrode to the NCM positive electrode. The results are shown in TABLE 7.

### [Example 3-3]

A nonaqueous electrolyte battery was produced and tested for the corrosion of the aluminum positive electrode current collector in the same manner as in Example 1-5 except that the testing positive electrode used was changed from the LMNO positive electrode to the LFP positive electrode. The results are shown in TABLE 7.

### [Example 3-4]

A nonaqueous electrolyte battery was produced and tested for the corrosion of the aluminum positive electrode current collector in the same manner as in Example 1-9 except that: the testing positive electrode used was changed from the LMNO positive electrode to the LFP positive electrode; and the lithium bis(fluorophosphonyl)imide was used at a concentration of 7.0 mass% as the component (III) in place of the lithium difluorophosphate. The results are shown in TABLE 7.

### [Comparative Example 3-1]

A nonaqueous electrolyte solution was prepared by dissolving the lithium trifluoromethanesulfonate at a concentration of 2.0 mass% as the component (III) in the basic nonaqueous electrolyte solution A. Using this nonaqueous electrolyte solution (in which the component (IV) was not contained), a nonaqueous electrolyte battery (LCO positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 7.

### [Comparative Example 3-2]

A nonaqueous electrolyte solution was prepared by dissolving the lithium trifluoromethanesulfonate at a concentration of 2.0 mass% as the component (III) in the basic nonaqueous electrolyte solution A. Using this nonaqueous electrolyte solution (in which the component (IV) was not contained), a nonaqueous electrolyte battery (NCM positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 7.

### [Comparative Example 3-3]

A nonaqueous electrolyte solution was prepared by dissolving the lithium trifluoromethanesulfonate at a concentration of 2.0 mass% as the component (III) in the basic nonaqueous electrolyte solution A. Using this nonaqueous electrolyte solution (in which the component (IV) was not contained), a nonaqueous electrolyte battery (LFP positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 7.

### [Comparative Example 3-4]

A nonaqueous electrolyte solution was prepared by dissolving the lithium bis(fluorophosphonyl)imide at a concentration of 7.0 mass% as the component (III) in the basic nonaqueous electrolyte solution A. Using this nonaqueous electrolyte solution (in which the component (IV) was not contained), a nonaqueous electrolyte battery (LFP positive electrode) was produced in the same manner as mentioned above. The thus-obtained nonaqueous electrolyte battery was subjected to initial charging/discharging and then tested for the degree of corrosion of the aluminum positive electrode current collector. The results are shown in TABLE 7.

**TABLE 7**

| | Positive Electrode | Electrolyte Solution for Nonaqueous Electrolyte Battery | | | | | Collector Corrosion Pits [number/ 50 µm²] |
|---|---|---|---|---|---|---|---|
| | | (I) | (II) | (III) | (IV) | | |
| | Charging Potential | | Kind Amount [mol/L] | Kind Amount [mass%] | Kind | Amount [mass ppm] | |
| Example 3-1 | LCO 4.4 V | EC:EMC = 1:2 (vol. ratio) | LiPF₆ 1.0 | LiPO₂F₂ 2.0 | LiPO₂Cl₂ | 53 | 13 |
| Comparative Example 3-1 | | | | | none | | 23 |
| Example 3-2 | NCM 4.2 V | | | | LiPO₂Cl₂ | 53 | 13 |
| Comparative Example 3-2 | | | | | none | | 18 |
| Example 3-3 | LFP 3.7 V | | | | LiPO₂Cl₂ | 53 | 8 |
| Comparative Example 3-3 | | | | | none | | 13 |
| Example 3-4 | | | | lithium bis(fluoro phosphonyl)imide 7.0 | chloride ion (ionized from (C₂H₅)₃NHCl) | 48 | 2 |
| Comparative Example 3-4 | | | | | none | | 8 |

In the case of changing the positive electrode and decreasing the charging potential from 4.7 V to 4.4 V (Comparative Example 3-1), 4.2 V (Comparative Example 3-2) or 3.7 V (Comparative Example 3-3), there was a tendency that the corrosion of the aluminum positive electrode current collector by lithium difluorophosphate was suppressed as the potential was decreased as shown in TABLE 7. It is apparent from the results of Examples 3-1, 3-2, 3-3 and 3-4 that, even in the case where the corrosion of the aluminum positive electrode current collector was suppressed to some extent as mentioned above, it was possible to further suppress the corrosion of the aluminum positive electrode current collector with the addition of the component (VI). Even though the aluminum foil used as the positive electrode current collector was of A3003 aluminum-manganese alloy (manganese content: 1.0 to 1.5%, iron content: 0.7% or less, silicon content: 0.6% or less, Zn content: 0.1% or less, Cu content: 0.05 to 0.2%, other metals: 0.15% or less in total, with the balance being Al), the effects of the present invention are similarly obtained not only in the case of using an aluminum foil made of aluminum alloy containing an equivalent amount (95% or more) of aluminum and other metal but also in the case of using an aluminum foil made of pure aluminum material containing a larger amount of aluminum.

## Claims

1. A nonaqueous electrolyte battery comprising:
a positive electrode having an aluminum foil as a positive electrode current collector;
a negative electrode formed of lithium, a negative electrode material capable of occluding and releasing lithium, sodium or a negative electrode material capable of occluding and releasing sodium; and
an electrolyte solution comprising the following components:
(I) a nonaqueous organic solvent;
(II) a fluorine-containing ionic salt as a solute; and
(III) an additive being at least one kind selected from the group consisting of a fluorine-containing imide salt, a fluorine-containing sulfonic acid salt and a fluorine-containing phosphoric acid salt,
**characterized in that**:
the electrolyte solution further comprises the following component: (IV) at least one kind selected from the group consisting of lithium chloride, potassium chloride, sodium chloride, magnesium chloride, calcium chloride, lead chloride, cobalt chloride, manganese chloride, iron chloride, copper chloride, quaternary ammonium chlorides, chloromethane, trichloromethane, carbon tetrachloride, dichloromethane, dichloroethane, chloroethane, trichloroethane, chloroethene, trichloroethylene, tetrachloroethylene, acetyl chloride, methyl chloroformate, ethyl chloroformate, oxalyl chloride, chlorobenzene, chlorotoluene, phosphorous trichloride, phosphorus dichloride fluoride, phosphorus chloride difluoride, phosphoryl dichloride fluoride, phosphoryl chloride difluoride, phosphorus tetrachloride fluoride, phosphorus trichloride difluoride, phosphorus dichloride trifluoride, phosphorus chloride tetrafluoride, hexachloride phosphate, pentachloride fluoride phosphate, tetrachloride difluoride phosphate, trichloride trifluoride phosphate, dichloride tetrafluoride phosphate, chloride pentafluoride phosphate, monochlorophosphate, dichlorophosphate, monochloromonofluorophosphate, methanesulfonyl chloride, trifluoromethanesulfonyl chloride, sulfuryl chloride, sulfuryl chloride fluoride, chlorosulfonic acid, benzenesulfonyl chloride, p-toluenesulfonyl chloride, sulfinyl chloride, sulfinyl chloride fluoride, trialkylchlorosilane, dialkyldichlorosilane, alkyltrichlorosilane, dialkylchlorohydrosilane, alkyldichlorohydrosilane and alkylchlorodihydrosilane where alkyl is selected from C₁-C₁₀ aliphatic hydrocarbon groups and C₆-C₁₀ aromatic hydrocarbon groups ; and
the concentration of the component (IV) is 0.1 mass ppm to 500 mass ppm in terms of chlorine atom relative to the total amount of the components (I) and (II).

2. The nonaqueous electrolyte battery according to claim 1, wherein the component (IV) is at least one kind selected from the group consisting of lithium chloride, potassium chloride, sodium chloride, magnesium chloride, calcium chloride, lead chloride, cobalt chloride, manganese chloride, iron chloride, copper chloride, quaternary ammonium chlorides, trichloromethane, dichloromethane, trichloroethylene, tetrachloroethylene, acetyl chloride, oxalyl chloride, dichlorophosphate, methanesulfonyl chloride, trifluoromethanesulfonyl chloride, sulfuryl chloride, sulfinyl chloride, trimethylchlorosilane, dimethylchlorosilane and methyltrichlorosilane.

3. The nonaqueous electrolyte battery according to claim 1, wherein the component (IV) is at least one kind selected from the group consisting of lithium chloride, potassium chloride, sodium chloride, magnesium chloride, calcium chloride, lead chloride, cobalt chloride, manganese chloride, iron chloride, copper chloride and quaternary ammonium chlorides.

4. The nonaqueous electrolyte battery according to claim 1 or 2, wherein the concentration of the component (IV) is 0.2 mass ppm to 300 mass ppm in terms of chlorine atom relative to the total amount of the components (I) and (II).

5. The nonaqueous electrolyte battery according to any one of claims 1 to 4, wherein the concentration of the component (III) as the additive is 0.02 mass% to 10.0 mass% relative to the total amount of the components (I), (II), (III) and (IV).

6. The nonaqueous electrolyte battery according to claim 5, wherein the concentration of the component (III) is 0.02 mass% to 4.0 mass%.

7. The nonaqueous electrolyte battery according to any one of claims 1 to 6, wherein the ionic salt as the solute is an ionic salt having a pair of: at least one kind of cation selected from the group consisting of lithium cation and sodium cation; and at least one kind of anion selected from hexafluorophosphate anion, tetrafluoroborate anion, difluorooxalatoborate anion, tetrafluorooxalatophosphate anion, trifluoromethanesulfonate anion, fluorosulfonate anion, bis(trifluoromethanesulfonyl)imide anion, bis(fluorosulfonyl)imide anion, (trifluoromethanesulfonyl)(fluorosulfonyl)imide anion, bis(difluorophosphonyl)imide anion, (difluorophosphonyl)(fluorosulfonyl)imide anion and (difluorophosphonyl)(trifluorosulfonyl)imide anion.

8. The nonaqueous electrolyte battery according to any one of claims 1 to 7,
wherein the fluorine-containing imide salt as the additive is at least one kind selected from the group consisting of bis(trifluoromethanesulfonyl)imide salt, bis(pentafluroethanesulfonyl)imide salt, bis(fluorosulfonyl)imide salt, (trifluoromethanesulfonyl)(pentafluoroethanesulfonyl)imide salt, (trifluoromethanesulfonyl)(fluorosulfonyl)imide salt, (pentafluoroethanesulfonyl)(fluorosulfonyl)imide salt, bis(difluorophosphonyl)imide salt, (difluorophosphonyl)(fluorosulfonyl)imide salt and (difluorophosphonyl)(trifluorosulfonyl)imide salt;
wherein the fluorine-containing sulfonic acid salt as the additive is at least one kind selected from the group consisting of trifluoromethanesulfonate salt, fluoromethanesulfonate salt and pentafluoroethanesulfonate salt; and
wherein the fluorine-containing phosphoric acid salt as the additive is at least one kind selected from the group consisting of monofluorophosphate salt and difluorophosphate salt.

9. The nonaqueous electrolyte battery according to any one of claims 1 to 8, wherein cations of the fluorine-containing imide salt, the fluorine-containing sulfonic acid salt and the fluorine-containing phosphoric acid salt as the additive are each at least one kind selected from the group consisting of lithium cation, sodium cation, potassium cation and tertiary ammonium cation.

10. The nonaqueous electrolyte battery according to any one of claims 1 to 9, wherein the nonaqueous organic solvent is at least one kind selected from the group consisting of ethyl methyl carbonate, dimethyl carbonate, diethyl carbonate, methyl propyl carbonate, ethyl propyl carbonate, methyl butyl carbonate, ethylene carbonate, propylene carbonate, butylene carbonate, fluoroethylene carbonate, methyl acetate, ethyl acetate, methyl propionate, ethyl propionate, methyl 2-fluoropropionate, ethyl 2-fluoropropionate, diethyl ether, acetonitrile, propionitrile, tetrahydrofuran, 2-methyltetrahydrofuran, furan, tetrahydropyran, 1,3-dioxane, 1,4-dioxane, dibutyl ether, diisopropyl ether, 1,2-dimethoxyethane, N,N-dimethylformamide, dimethylsulfoxide, sulfolane, γ-butyrolactone and γ-valerolactone.

11. The nonaqueous electrolyte battery according to any one of claims 1 to 9, wherein the nonaqueous organic solvent contains at least one kind selected from the group consisting of cyclic carbonate, chain carbonate and ester.

12. The nonaqueous electrolyte battery according to claim 11,
wherein the cyclic carbonate is at least one kind selected from the group consisting of ethylene carbonate, propylene carbonate and butylene carbonate;
wherein the chain carbonate is at least one kind selected from the group consisting of ethyl methyl carbonate, dimethyl carbonate, diethyl carbonate, methyl propyl carbonate, ethyl propyl carbonate and methyl butyl carbonate; and
wherein the ester is at least one kind selected from the group consisting of methyl acetate, ethyl acetate, methyl propionate, ethyl propionate, methyl 2-fluoropropionate and ethyl 2-fluoropropionate.

13. Use of an electrolyte solution for a nonaqueous electrolyte battery,
the nonaqueous electrolyte battery comprising a positive electrode having an aluminum foil as a positive electrode current collector and a negative electrode formed of lithium, a negative electrode material capable of occluding and releasing lithium, sodium or a negative electrode material capable of occluding and releasing sodium,
the electrolyte solution comprising the following components:
(I) a nonaqueous organic solvent;
(II) a fluorine-containing ionic salt as a solute;
(III) an additive being at least one kind selected from the group consisting of a fluorine-containing imide salt, a fluorine-containing sulfonic acid salt and a fluorine-containing phosphoric acid salt;
**characterized in that**:
the electrolyte solution further comprises the following component: (IV) at least one kind selected from the group consisting of lithium chloride, potassium chloride, sodium chloride, magnesium chloride, calcium chloride, lead chloride, cobalt chloride, manganese chloride, iron chloride, copper chloride, quaternary ammonium chlorides, chloromethane, trichloromethane, carbon tetrachloride, dichloromethane, dichloroethane, chloroethane, trichloroethane, chloroethene, trichloroethylene, tetrachloroethylene, acetyl chloride, methyl chloroformate, ethyl chloroformate, oxalyl chloride, chlorobenzene, chlorotoluene, phosphorous trichloride, phosphorus dichloride fluoride, phosphorus chloride difluoride, phosphoryl dichloride fluoride, phosphoryl chloride difluoride, phosphorus tetrachloride fluoride, phosphorus trichloride difluoride, phosphorus dichloride trifluoride, phosphorus chloride tetrafluoride, hexachloride phosphate, pentachloride fluoride phosphate, tetrachloride difluoride phosphate, trichloride trifluoride phosphate, dichloride tetrafluoride phosphate, chloride pentafluoride phosphate, monochlorophosphate, dichlorophosphate, monochloromonofluorophosphate, methanesulfonyl chloride, trifluoromethanesulfonyl chloride, sulfuryl chloride, sulfuryl chloride fluoride, chlorosulfonic acid, benzenesulfonyl chloride, p-toluenesulfonyl chloride, sulfinyl chloride, sulfinyl chloride fluoride, trialkylchlorosilane, dialkyldichlorosilane, alkyltrichlorosilane, dialkylchlorohydrosilane, alkyldichlorohydrosilane and alkylchlorodihydrosilane where alkyl is selected from C₁-C₁₀ aliphatic hydrocarbon groups and C₆-C₁₀ aromatic hydrocarbon groups,
wherein the concentration of the component (IV) is 0.1 mass ppm to 500 mass ppm in terms of chlorine atom relative to the total amount of the components (I) and (II)

## Patentansprüche

1. Batterie mit nicht-wässrigem Elektrolyt, umfassend:
eine positive Elektrode, die eine Aluminiumfolie als einen Positivelektroden-Stromkollektor aufweist;
eine negative Elektrode, die mit Lithium, einem Negativelektrodenmaterial, das fähig ist, Lithium einzuschließen und freizusetzen, Natrium oder einem Negativelektrodenmaterial, das fähig ist, Natrium einzuschließen und freizusetzen, gebildet ist; und
eine Elektrolytlösung, welche die folgenden Komponenten umfasst:
(I) ein nicht-wässriges organisches Lösungsmittel;
(II) ein fluorhaltiges ionisches Salz als einen gelösten Stoff; und
(III) ein Additiv, das mindestens eine Art ist, welche ausgewählt ist aus der Gruppe bestehend aus einem fluorhaltigen Imid-Salz, einem fluorhaltigen Sulfonsäure-Salz und einem fluorhaltigen Phosphorsäure-Salz,
**dadurch gekennzeichnet, dass**:
die Elektrolytlösung zudem die folgende Komponente umfasst: (IV) mindestens eine Art, welche ausgewählt ist aus der Gruppe bestehend aus Lithiumchlorid, Kaliumchlorid, Natriumchlorid, Magnesiumchlorid, Calciumchlorid, Bleichlorid, Cobaltchlorid, Manganchlorid, Eisenchlorid, Kupferchlorid, quartären Ammoniumchloriden, Chlormethan, Trichlormethan, Kohlenstofftetrachlorid, Dichlormethan, Dichlorethan, Chlorethan, Trichlorethan, Chlorethen, Trichlorethylen, Tetrachlorethylen, Acetylchlorid, Methylchlorformiat, Ethylchlorformiat, Oxalylchlorid, Chlorbenzol, Chlortoluol, Phosphortrichlorid, Phosphordichloridfluorid, Phosphorchloriddifluorid, Phosphoryldichloridfluorid, Phosphorylchloriddifluorid, Phosphortetrachloridfluorid, Phosphortrichloriddifluorid, Phosphordichloridtrifluorid, Phosphorchloridtetrafluorid, Hexachloridphosphat, Pentachloridfluoridphosphat, Tetrachloriddifluoridphosphat, Trichloridtrifluoridphosphat, Dichloridtetrafluoridphosphat, Chloridpentafluoridphosphat, Monochlorphosphat, Dichlorphosphat, Monochlormonofluorphosphat, Methansulfonylchlorid, Trifluormethansulfonylchlorid, Sulfurylchlorid, Sulfurylchloridfluorid, Chlorsulfonsäure, Benzolsulfonylchlorid, p-Toluolsulfonylchlorid, Sulfinylchlorid, Sulfinylchloridfluorid, Trialkylchlorsilan, Dialkyldichlorsilan, Alkyltrichlorsilan, Dialkylchlorhydrosilan, Alkyldichlorhydrosilan und Alkylchlordihydrosilan, worin Alkyl aus aliphatischen C₁-C₁₀-Kohlenwasserstoffgruppen und aromatischen C₆-C₁₀-Kohlenwasserstoffgruppen ausgewählt ist; und
die Konzentration der Komponente (IV) 0,1 Massen-ppm bis 500 Massen-ppm in Bezug auf Chloratome relativ zur gesamten Menge der Komponenten (I) und (II) beträgt.

2. Batterie mit nicht-wässrigem Elektrolyt nach Anspruch 1, wobei die Komponente (IV) mindestens eine Art ist, welche ausgewählt ist aus der Gruppe bestehend aus Lithiumchlorid, Kaliumchlorid, Natriumchlorid, Magnesiumchlorid, Calciumchlorid, Bleichlorid, Cobaltchlorid, Manganchlorid, Eisenchlorid, Kupferchlorid, quartären Ammoniumchloriden, Trichlormethan, Dichlormethan, Trichlorethylen, Tetrachlorethylen, Acetylchlorid, Oxalylchlorid, Dichlorphosphat, Methansulfonylchlorid, Trifluormethansulfonylchlorid, Sulfurylchlorid, Sulfinylchlorid, Trimethylchlorsilan, Dimethylchlorsilan und Methyltrichlorsilan.

3. Batterie mit nicht-wässrigem Elektrolyt nach Anspruch 1, wobei die Komponente (IV) mindestens eine Art ist, welche ausgewählt ist aus der Gruppe bestehend aus Lithiumchlorid, Kaliumchlorid, Natriumchlorid, Magnesiumchlorid, Calciumchlorid, Bleichlorid, Cobaltchlorid, Manganchlorid, Eisenchlorid, Kupferchlorid und quartären Ammoniumchloriden.

4. Batterie mit nicht-wässrigem Elektrolyt nach Anspruch 1 oder 2, wobei die Konzentration der Komponente (IV) 0,2 Massen-ppm bis 300 Massen-ppm in Bezug auf Chloratome relativ zur gesamten Menge der Komponenten (I) und (II) beträgt.

5. Batterie mit nicht-wässrigem Elektrolyt nach einem der Ansprüche 1 bis 4, wobei die Konzentration der Komponente (III) als dem Additiv 0,02 Massen-% bis 10,0 Massen-% relativ zur gesamten Menge der Komponenten (I), (II), (III) und (IV) beträgt.

6. Batterie mit nicht-wässrigem Elektrolyt nach Anspruch 5, wobei die Konzentration der Komponente (III) 0,02 Massen-% bis 4,0 Massen-% beträgt.

7. Batterie mit nicht-wässrigem Elektrolyt nach einem der Ansprüche 1 bis 6, wobei das ionische Salz als der gelöste Stoff ein ionisches Salz ist mit einem Paar von: mindestens einer Art von Kation, ausgewählt aus der Gruppe bestehend aus Lithium-Kation und Natrium-Kation; und mindestens einer Art von Anion, ausgewählt aus Hexafluorphosphat-Anion, Tetrafluorborat-Anion, Difluoroxalatoborat-Anion, Tetrafluoroxalatophosphat-Anion, Trifluormethansulfonat-Anion, Fluorsulfonat-Anion, Bis(trifluormethansulfonyl)imid-Anion, Bis(fluorsulfonyl)imid-Anion, (Trifluormethansulfonyl)-(fluorsulfonyl)imid-Anion, Bis(difluorphosphonyl)imid-Anion, (Difluor-phosphonyl)(fluorsulfonyl)imid-Anion und (Difluorphosphonyl)(trifluor-sulfonyl)imid-Anion.

8. Batterie mit nicht-wässrigem Elektrolyt nach einem der Ansprüche 1 bis 7,
wobei das fluorhaltige Imid-Salz als das Additiv mindestens eine Art ist, welche ausgewählt ist aus der Gruppe bestehend aus Bis(trifluormethansulfonyl)imid-Salz, Bis(pentafluorethansulfonyl)imid-Salz, Bis(fluorsulfonyl)imid-Salz, (Trifluormethansulfonyl)(pentafluorethan-sulfonyl)imid-Salz, (Trifluormethansulfonyl)(fluorsulfonyl)imid-Salz, (Penta-fluorethansulfonyl)(fluorsulfonyl)imid-Salz, Bis(difluorphosphonyl)imid-Salz, (Difluorphosphonyl)(fluorsulfonyl)imid-Salz und (Difluorphosphonyl)-(trifluorsulfonyl)imid-Salz;
wobei das fluorhaltige Sulfonsäure-Salz als das Additiv mindestens eine Art ist, welche ausgewählt ist aus der Gruppe bestehend aus Trifluormethansulfonat-Salz, Fluormethansulfonat-Salz und Pentafluorethansulfonat-Salz; und
wobei das fluorhaltige Phosphorsäure-Salz als das Additiv mindestens eine Art ist, welche ausgewählt ist aus der Gruppe bestehend aus Monofluorophosphat-Salz und Difluorophosphat-Salz.

9. Batterie mit nicht-wässrigem Elektrolyt nach einem der Ansprüche 1 bis 8, wobei Kationen des fluorhaltigen Imid-Salzes, des fluorhaltigen Sulfonsäure-Salzes und des fluorhaltigen Phosphorsäure-Salzes als des Additivs jeweils mindestens eine Art sind, welche ausgewählt ist aus der Gruppe bestehend aus Lithium-Kation, Natrium-Kation, Kalium-Kation und tertiärem Ammonium-Kation.

10. Batterie mit nicht-wässrigem Elektrolyt nach einem der Ansprüche 1 bis 9, wobei das nicht-wässrige organische Lösungsmittel mindestens eine Art ist, welche ausgewählt ist aus der Gruppe bestehend aus Ethylmethylcarbonat, Dimethylcarbonat, Diethylcarbonat, Methylpropylcarbonat, Ethylpropylcarbonat, Methylbutylcarbonat, Ethylencarbonat, Propylencarbonat, Butylencarbonat, Fluorethylencarbonat, Methylacetat, Ethylacetat, Methylpropionat, Ethylpropionat, Methyl-2-fluorpropionat, Ethyl-2-fluorpropionat, Diethylether, Acetonitril, Propionitril, Tetrahydrofuran, 2-Methyltetrahydrofuran, Furan, Tetrahydropyran, 1,3-Dioxan, 1,4-Dioxan, Dibutylether, Diisopropylether, 1,2-Dimethoxyethan, N,N-Dimethylformamid, Dimethylsulfoxid, Sulfolan, γ-Butyrolacton und γ-Valerolacton.

11. Batterie mit nicht-wässrigem Elektrolyt nach einem der Ansprüche 1 bis 9, wobei das nicht-wässrige organische Lösungsmittel mindestens eine Art enthält, welche ausgewählt ist aus der Gruppe bestehend aus zyklischem Carbonat, Ketten-Carbonat und Ester.

12. Batterie mit nicht-wässrigem Elektrolyt nach Anspruch 11,
wobei das zyklische Carbonat mindestens eine Art ist, welche ausgewählt ist aus der Gruppe bestehend aus Ethylencarbonat, Propylencarbonat und Butylencarbonat;
wobei das Ketten-Carbonat mindestens eine Art ist, welche ausgewählt ist aus der Gruppe bestehend aus Ethylmethylcarbonat, Dimethylcarbonat, Diethylcarbonat, Methylpropylcarbonat, Ethylpropylcarbonat und Methylbutylcarbonat; und
wobei der Ester mindestens eine Art ist, welche ausgewählt ist aus der Gruppe bestehend aus Methylacetat, Ethylacetat, Methylpropionat, Ethylpropionat, Methyl-2-fluorpropionat und Ethyl-2-fluorpropionat.

13. Verwendung einer Elektrolytlösung für eine Batterie mit nicht-wässrigem Elektrolyt,
wobei die Batterie mit nicht-wässrigem Elektrolyt eine positive Elektrode, die eine Aluminiumfolie als einen Positivelektroden-Stromkollektor aufweist, und eine negative Elektrode umfasst, die mit Lithium, einem Negativelektrodenmaterial, das fähig ist, Lithium einzuschließen und freizusetzen, Natrium oder einem Negativelektrodenmaterial, das fähig ist, Natrium einzuschließen und freizusetzen, gebildet ist,
wobei die Elektrolytlösung die folgenden Komponenten umfasst:
(I) ein nicht-wässriges organisches Lösungsmittel;
(II) ein fluorhaltiges ionisches Salz als einen gelösten Stoff;
(III) ein Additiv, das mindestens eine Art ist, welche ausgewählt ist aus der Gruppe bestehend aus einem fluorhaltigen Imid-Salz, einem fluorhaltigen Sulfonsäure-Salz und einem fluorhaltigen Phosphorsäure-Salz;
**dadurch gekennzeichnet, dass**:
die Elektrolytlösung zudem die folgende Komponente umfasst: (IV) mindestens eine Art, welche ausgewählt ist aus der Gruppe bestehend aus Lithiumchlorid, Kaliumchlorid, Natriumchlorid, Magnesiumchlorid, Calciumchlorid, Bleichlorid, Cobaltchlorid, Manganchlorid, Eisenchlorid, Kupferchlorid, quartären Ammoniumchloriden, Chlormethan, Trichlormethan, Kohlenstofftetrachlorid, Dichlormethan, Dichlorethan, Chlorethan, Trichlorethan, Chlorethen, Trichlorethylen, Tetrachlorethylen, Acetylchlorid, Methylchlorformiat, Ethylchlorformiat, Oxalylchlorid, Chlorbenzol, Chlortoluol, Phosphortrichlorid, Phosphordichloridfluorid, Phosphorchloriddifluorid, Phosphoryldichloridfluorid, Phosphorylchloriddifluorid, Phosphortetrachloridfluorid, Phosphortrichloriddifluorid, Phosphordichloridtrifluorid, Phosphorchloridtetrafluorid, Hexachloridphosphat, Pentachloridfluoridphosphat, Tetrachloriddifluoridphosphat, Trichloridtrifluoridphosphat, Dichloridtetrafluoridphosphat, Chloridpentafluoridphosphat, Monochlorphosphat, Dichlorphosphat, Monochlormonofluorphosphat, Methansulfonylchlorid, Trifluormethansulfonylchlorid, Sulfurylchlorid, Sulfurylchloridfluorid, Chlorsulfonsäure, Benzolsulfonylchlorid, p-Toluolsulfonylchlorid, Sulfinylchlorid, Sulfinylchloridfluorid, Trialkylchlorsilan, Dialkyldichlorsilan, Alkyltrichlorsilan, Dialkylchlorhydrosilan, Alkyldichlorhydrosilan und Alkylchlordihydrosilan, worin Alkyl aus aliphatischen C₁-C₁₀-Kohlenwasserstoffgruppen und aromatischen C₆-C₁₀-Kohlenwasserstoffgruppen ausgewählt ist,
wobei die Konzentration der Komponente (IV) 0,1 Massen-ppm bis 500 Massen-ppm in Bezug auf Chloratome relativ zur gesamten Menge der Komponenten (I) und (II) beträgt.

## Revendications

1. Batterie à électrolyte non aqueux comprenant :
une électrode positive ayant une feuille d'aluminium comme collecteur de courant d'électrode positive ;
une électrode négative formée de lithium, d'un matériau d'électrode négative capable d'occlure et de libérer du lithium, de sodium ou d'un matériau d'électrode négative capable d'occlure et de libérer du sodium ; et
une solution d'électrolyte comprenant les composants suivants :
(I) un solvant organique non aqueux ;
(II) un sel ionique fluoré en tant que soluté ; et
(III) un additif d'au moins un type choisi dans le groupe constitué par un sel d'imide fluoré, un sel d'acide sulfonique fluoré et un sel d'acide phosphorique fluoré,
**caractérisée en ce que** :
la solution d'électrolyte comprend en outre le composant suivant :
(IV) au moins un type choisi dans le groupe constitué par le chlorure de lithium, le chlorure de potassium, le chlorure de sodium, le chlorure de magnésium, le chlorure de calcium, le chlorure de plomb, le chlorure de cobalt, le chlorure de manganèse, le chlorure de fer, le chlorure de cuivre, les chlorures d'ammonium quaternaires, le chlorométhane, le trichlorométhane, le tétrachlorure de carbone, le dichlorométhane, le dichloroéthane, le chloroéthane, le trichloroéthane, le chloroéthène, le trichloroéthylène, le tétrachloréthylène, le chlorure d'acétyle, le chloroformiate de méthyle, le chloroformiate d'éthyle, le chlorure d'oxalyle, le chlorobenzène, le chlorotoluène, le trichlorure de phosphore, le fluorure de dichlorure de phosphore, le difluorure de chlorure de phosphore, le fluorure de dichlorure de phosphoryle, le difluorure de chlorure de phosphoryle, le fluorure de tétrachlorure de phosphore, le difluorure de trichlorure de phosphore, le trifluorure de dichlorure de phosphore, le tétrafluorure de chlorure de phosphore, le phosphate d'hexachlorure, le phosphate de fluorure de pentachlorure, le phosphate de difluorure de tétrachlorure, le phosphate de trifluorure de trichlorure, le phosphate de tétrafluorure de dichlorure, le phosphate de pentafluorure de chlorure, le monochlorophosphate, le dichlorophosphate, le monochloromonofluorophosphate, le chlorure de méthanesulfonyle, le chlorure de trifluorométhanesulfonyle, le chlorure de sulfuryle, le fluorure de chlorure de sulfuryle, l'acide chlorosulfonique, le chlorure de benzènesulfonyle, le chlorure de p-toluènesulfonyle, le chlorure de sulfinyle, le fluorure de chlorure de sulfinyle, le trialkylchlorosilane, le dialkyldichlorosilane, l'alkyltrichlorosilane, le dialkylchlorohydrosilane, l'alkyldichlorohydrosilane et l'alkylchlorodihydrosilane où l'alkyle est choisi parmi les groupes d'hydrocarbures aliphatiques en C₁-C₁₀ et les groupes d'hydrocarbures aromatiques en C₆-C₁₀ ; et
la concentration du composant (IV) est comprise entre 0,1 ppm en masse à 500 ppm en masse en termes d'atomes de chlore par rapport à la quantité totale des composants (I) et (II).

2. Batterie à électrolyte non aqueux selon la revendication 1, dans laquelle le composant (IV) est au moins un type choisi dans le groupe constitué par le chlorure de lithium, le chlorure de potassium, le chlorure de sodium, le chlorure de magnésium, le chlorure de calcium, le chlorure de plomb, le chlorure de cobalt, le chlorure de manganèse, le chlorure de fer, le chlorure de cuivre, les chlorures d'ammonium quaternaire, le trichlorométhane, le dichlorométhane, le trichloroéthylène, le tétrachloroéthylène, le chlorure d'acétyle, le chlorure d'oxalyle, le dichlorophosphate, le chlorure de méthanesulfonyle, le chlorure de trifluorométhanesulfonyle, le chlorure de sulfuryle, le chlorure de sulfinyle, le triméthylchlorosilane, le diméthylchlorosilane et le méthyltrichlorosilane.

3. Batterie à électrolyte non aqueux selon la revendication 1, dans laquelle le composant (IV) est au moins un type choisi dans le groupe constitué par le chlorure de lithium, le chlorure de potassium, le chlorure de sodium, le chlorure de magnésium, le chlorure de calcium, le chlorure de plomb, le chlorure de cobalt, le chlorure de manganèse, le chlorure de fer, le chlorure de cuivre et les chlorures d'ammonium quaternaires.

4. Batterie à électrolyte non aqueux selon la revendication 1 ou 2, dans laquelle la concentration du composant (IV) est comprise entre 0,2 ppm en masse et 300 ppm en masse en termes d'atomes de chlore par rapport à la quantité totale des composants (I) et (II).

5. Batterie à électrolyte non aqueux selon l'une quelconque des revendications 1 à 4, dans laquelle la concentration du composant (III) en tant qu'additif est de 0,02 % en masse à 10,0 % en masse par rapport à la quantité totale des composants (I), (II), (III) et (IV).

6. Batterie à électrolyte non aqueux selon la revendication 5, dans laquelle la concentration du composant (III) est de 0,02 % en masse à 4,0 % en masse.

7. Batterie à électrolyte non aqueux selon l'une quelconque des revendications 1 à 6, dans laquelle le sel ionique en tant que soluté est un sel ionique ayant une paire de : au moins un type de cation choisi dans le groupe constitué par le cation lithium et le cation sodium ; et au moins un type d'anion choisi parmi l'anion hexafluorophosphate, l'anion tétrafluoroborate, l'anion difluorooxalatoborate, l'anion tétrafluorooxalatophosphate, l'anion trifluorométhanesulfonate, l'anion fluorosulfonate, l'anion bis(trifluorométhanesulfonyl)imide, l'anion bis(fluorosulfonyl)imide, l'anion (trifluorométhanesulfonyl)(fluorosulfonyl)imide, l'anion bis(difluorophosphonyl)imide, l'anion (difluorophosphonyl)(fluorosulfonyl)imide et l'anion (difluorophosphonyl)(trifluorosulfonyl)imide.

8. Batterie à électrolyte non aqueux selon l'une quelconque des revendications 1 à 7,
dans laquelle le sel d'imide fluoré en tant qu'additif est au moins un type choisi dans le groupe constitué par le sel de bis(trifluorométhanesulfonyl)imide, le sel de bis(pentafluroéthanesulfonyl)imide, le sel de bis(fluorosulfonyl)imide, le sel de (trifluorométhanesulfonyle)(pentafluoroéthanesulfonyle)imide, le sel de (trifluorométhanesulfonyle)(fluorosulfonyle)imide, le sel de (pentafluoroéthanesulfonyle)(fluorosulfonyle)imide, le sel de bis(difluorophosphonyl)imide, le sel de (difluorophosphonyl)(fluorosulfonyl)imide et le sel de (difluorophosphonyl)(trifluorosulfonyl)imide ;
dans laquelle le sel d'acide sulfonique fluoré en tant qu'additif est au moins un type choisi dans le groupe constitué par le sel de trifluorométhanesulfonate, le sel de fluorométhanesulfonate et le sel de pentafluoroéthanesulfonate ; et
dans laquelle le sel d'acide phosphorique fluoré en tant qu'additif est au moins un type choisi dans le groupe constitué par le sel de monofluorophosphate et le sel de difluorophosphate.

9. Batterie à électrolyte non aqueux selon l'une quelconque des revendications 1 à 8, dans laquelle les cations du sel d'imide fluoré, du sel d'acide sulfonique fluoré et du sel d'acide phosphorique fluoré en tant qu'additif sont chacun d'au moins un type choisi dans le groupe constitué par le cation lithium, le cation sodium, le cation potassium et le cation ammonium tertiaire.

10. Batterie à électrolyte non aqueux selon l'une quelconque des revendications 1 à 9, dans laquelle le solvant organique non aqueux est au moins un type choisi dans le groupe constitué par le carbonate d'éthyle et de méthyle, le carbonate de diméthyle, le carbonate de diéthyle, le carbonate de méthyle et de propyle, le carbonate d'éthyle et de propyle, le carbonate de méthyle et de butyle, le carbonate d'éthylène, le carbonate de propylène, le carbonate de butylène, le carbonate de fluoroéthylène, l'acétate de méthyle, l'acétate d'éthyle, le propionate de méthyle, le propionate d'éthyle, le 2-fluoropropionate de méthyle, le 2-fluoropropionate d'éthyle, l'éther diéthylique, l'acétonitrile, le propionitrile, le tétrahydrofurane, le 2- méthyltétrahydrofurane, le furane, le tétrahydropyran, le 1,3-dioxane, le 1,4-dioxane, l'éther dibutylique, l'éther diisopropylique, le 1,2-diméthoxyéthane, le N,N-diméthylformamide, le diméthylsulfoxyde, le sulfolane, le γ-butyrolactone et le γ-valérolactone.

11. Batterie à électrolyte non aqueux selon l'une quelconque des revendications 1 à 9, dans laquelle le solvant organique non aqueux contient au moins un type choisi dans le groupe constitué par le carbonate cyclique, le carbonate en chaîne et un ester.

12. Batterie à électrolyte non aqueux selon la revendication 11,
dans laquelle le carbonate cyclique est au moins un type choisi dans le groupe constitué par le carbonate d'éthylène, le carbonate de propylène et le carbonate de butylène ;
dans laquelle le carbonate en chaîne est au moins un type choisi dans le groupe constitué par le carbonate d'éthyle et de méthyle, le carbonate de diméthyle, le carbonate de diéthyle, le carbonate de méthyle et de propyle, le carbonate d'éthyle et de propyle et le carbonate de méthyle et de butyle ; et
dans laquelle l'ester est au moins un type choisi dans le groupe constitué par l'acétate de méthyle, l'acétate d'éthyle, le propionate de méthyle, le propionate d'éthyle, le 2-fluoropropionate de méthyle et le 2-fluoropropionate d'éthyle.

13. Utilisation d'une solution électrolytique pour une batterie à électrolyte non aqueux,
la batterie à électrolyte non aqueux comprenant une électrode positive ayant une feuille d'aluminium comme collecteur de courant d'électrode positive et une électrode négative formée de lithium, d'un matériau d'électrode négative capable d'occlure et de libérer du lithium, de sodium ou d'un matériau d'électrode négative capable d'occlure et de libérer du sodium,
la solution d'électrolyte comprend les composants suivants :
(I) un solvant organique non aqueux ;
(II) un sel ionique fluoré en tant que soluté ;
(III) un additif d'au moins un type choisi dans le groupe constitué par un sel d'imide fluoré, un sel d'acide sulfonique fluoré et un sel d'acide phosphorique fluoré ;
**caractérisée en ce que** :
la solution d'électrolyte comprend en outre le composant suivant :
(IV) au moins un type choisi dans le groupe constitué par le chlorure de lithium, le chlorure de potassium, le chlorure de sodium, le chlorure de magnésium, le chlorure de calcium, le chlorure de plomb, le chlorure de cobalt, le chlorure de manganèse, le chlorure de fer, le chlorure de cuivre, les chlorures d'ammonium quaternaires, le chlorométhane, le trichlorométhane, le tétrachlorure de carbone, le dichlorométhane, le dichloroéthane, le chloroéthane, le trichloroéthane, le chloroéthène, le trichloroéthylène, le tétrachloréthylène, le chlorure d'acétyle, le chloroformiate de méthyle, le chloroformiate d'éthyle, le chlorure d'oxalyle, le chlorobenzène, le chlorotoluène, le trichlorure de phosphore, le fluorure de dichlorure de phosphore, le difluorure de chlorure de phosphore, le fluorure de dichlorure de phosphoryle, le difluorure de chlorure de phosphoryle, le fluorure de tétrachlorure de phosphore, le difluorure de trichlorure de phosphore, le trifluorure de dichlorure de phosphore, le tétrafluorure de chlorure de phosphore, le phosphate d'hexachlorure, le phosphate de fluorure de pentachlorure, le phosphate de difluorure de tétrachlorure, le phosphate de trifluorure de trichlorure, le phosphate de tétrafluorure de dichlorure, le phosphate de pentafluorure de chlorure, le monochlorophosphate, le dichlorophosphate, le monochloromonofluorophosphate, le chlorure de méthanesulfonyle, le chlorure de trifluorométhanesulfonyle, le chlorure de sulfuryle, le fluorure de chlorure de sulfuryle, l'acide chlorosulfonique, le chlorure de benzènesulfonyle, le chlorure de p-toluènesulfonyle, le chlorure de sulfinyle, le fluorure de chlorure de sulfinyle, le trialkylchlorosilane, le dialkyldichlorosilane, l'alkyltrichlorosilane, le dialkylchlorohydrosilane, l'alkyldichlorohydrosilane et l'alkylchlorodihydrosilane où l'alkyle est choisi parmi les groupes d'hydrocarbures aliphatiques en C₁-C₁₀ et les groupes d'hydrocarbures aromatiques en C₆-C₁₀,
dans laquelle la concentration du composant (IV) est comprise entre 0,1 ppm en masse à 500 ppm en masse en termes d'atomes de chlore par rapport à la quantité totale des composants (I) et (II).
